# EUROPEAN PATENT APPLICATION

(11) **EP 4 832 367 A1**
(43) Date of publication of application: **28.10.2026**
(21) Application number: 24906501.2
(22) Date of filing: 20.12.2024
(51) Int. Cl.: H04B 7/0456

(54) **PRECODING MATRIX ACQUISITION METHOD, TERMINAL AND NETWORK SIDE DEVICE**

(30) Priority: 22.12.2023 CN 202311794323
(71) Applicant: Vivo Mobile Communication Co., Ltd., Dongguan, Guangdong 523863 (CN)
(72) Inventor: YUAN, Jiangwei, Dongguan, Guangdong 523863 (CN); TAMRAKAR, Rakesh, Dongguan, Guangdong 523863 (CN)
(74) Representative: dompatent
(86) International application number: PCT/CN2024/140839
(87) International publication number: WO 2025/131026

(57) **Abstract**

This application discloses a method for obtaining a precoding matrix, a terminal, and a network side device, and relates to the field of wireless communication technologies. In embodiments of this application, the method for obtaining a precoding matrix includes: A terminal determines a target mapping relationship, where the target mapping relationship includes at least one of the following: a first mapping relationship between a plurality of available reference signal port numbers of a plurality of reference signals and a PMI port number, and a second mapping relationship between at least some reference signal port numbers of one reference signal and the PMI port number. The terminal obtains the precoding matrix based on the target mapping relationship.

## Description

### CROSS-REFERENCE TO RELATED APPLICATIONS

This application claims priority to Chinese Patent Application No. 202311794323.8, filed with the China National Intellectual Property Administration on December 22, 2023 and entitled "METHOD FOR OBTAINING PRECODING MATRIX, TERMINAL, AND NETWORK SIDE DEVICE", which is incorporated herein by reference in its entirety.

### TECHNICAL FIELD

This application relates to the field of wireless communication technologies, and in particular, to a method for obtaining a precoding matrix, a terminal, and a network side device.

### BACKGROUND

In the related art, for obtaining of a precoding matrix indicator (Precoding matrix indicator, PMI), a protocol agrees that for a type (Type) 1 codebook, a terminal obtains a PMI based on a configured channel state information (Channel State Information, CSI) reference signal (CSI Reference Signal, CSI-RS) or a selected CSI-RS. In other words, a PMI port number and a CSI-RS port number are mapped in a fixed manner. Therefore, in the related art, a mapping relationship between a reference signal port and a PMI port cannot be flexibly configured, which may result in relatively large overheads of a reference signal.

### SUMMARY

Embodiments of this application provide a method for obtaining a precoding matrix, a terminal, and a network side device, which can resolve a problem that a mapping relationship between a reference signal port and a PMI port cannot be flexibly configured.

According to a first aspect, a method for obtaining a precoding matrix is provided, including: A terminal determines a target mapping relationship, where the target mapping relationship includes at least one of the following: a first mapping relationship between a plurality of available reference signal port numbers of a plurality of reference signals and a PMI port number, and a second mapping relationship between at least some reference signal port numbers of one reference signal and the PMI port number; and the terminal obtains the precoding matrix based on the target mapping relationship.

According to a second aspect, a method for obtaining a precoding matrix is provided, including: A network side device receives a channel state information CSI report reported by a terminal, where the CSI report includes a precoding matrix obtained by the terminal based on a target mapping relationship, and the target mapping relationship includes at least one of the following: a first mapping relationship between a plurality of available reference signal port numbers of a plurality of reference signals and a PMI port number, and a second mapping relationship between at least some reference signal port numbers of one reference signal and the PMI port number; and the network side device obtains the precoding matrix in the CSI report.

According to a third aspect, an apparatus for obtaining a precoding matrix is provided, including: A first determining module determines a target mapping relationship, where the target mapping relationship includes at least one of the following: a first mapping relationship between a plurality of available reference signal port numbers of a plurality of reference signals and a precoding matrix indicator PMI port number, and a second mapping relationship between at least some reference signal port numbers of one reference signal and the PMI port number; and a first obtaining module is configured to obtain the precoding matrix based on the target mapping relationship.

According to a fourth aspect, an apparatus for obtaining a precoding matrix is provided, including: A transmission module is configured to receive a channel state information CSI report reported by a terminal, where the CSI report includes a precoding matrix obtained by the terminal based on a target mapping relationship, and the target mapping relationship includes at least one of the following: a first mapping relationship between a plurality of available reference signal port numbers of a plurality of reference signals and a PMI port number, and a second mapping relationship between at least some reference signal port numbers of one reference signal and the PMI port number; and a second obtaining module is configured to obtain the precoding matrix in the CSI report.

According to a fifth aspect, a terminal is provided. The terminal includes a processor and a memory. The memory stores a program or instructions executable on the processor. The program or the instructions, when executed by the processor, implement the steps of the method according to the first aspect.

According to a sixth aspect, a terminal is provided, including a processor and a communication interface, where the processor is configured to implement the steps of the method according to the first aspect, and the communication interface is configured to be coupled to the processor.

According to a seventh aspect, a network side device is provided. The network side device includes a processor and a memory. The memory stores a program or instructions executable on the processor. The program or the instructions, when executed by the processor, implement the steps of the method according to the second aspect.

According to an eighth aspect, a network side device is provided, including a processor and a communication interface, where the processor is configured to implement the steps of the method according to the second aspect, and the communication interface is configured to be coupled to the processor.

According to a ninth aspect, a readable storage medium is provided. The readable storage medium stores a program or instructions. The program or the instructions, when executed by a processor, implement the steps of the method according to the first aspect, or implement the steps of the method according to the second aspect.

According to a tenth aspect, a wireless communication system is provided, including a terminal and a network side device. The terminal may be configured to perform the steps of the method according to the first aspect. The network side device may be configured to perform the steps of the method according to the second aspect.

According to an eleventh aspect, a chip is provided. The chip includes a processor and a communication interface. The communication interface is coupled to the processor. The processor is configured to run a program or instructions to implement the steps of the method according to the first aspect, or implement the steps of the method according to the second aspect.

According to a twelfth aspect, a computer program/program product is provided. The computer program/program product is stored in a storage medium. The computer program/program product is executed by at least one processor to implement the steps of the method according to the first aspect, or implement the steps of the method according to the second aspect.

In embodiments of this application, the terminal may determine a first mapping relationship between a plurality of available reference signal port numbers of a plurality of reference signals and a precoding matrix indicator PMI port number, or a second mapping relationship between at least some reference signal port numbers of one reference signal and the PMI port number, and then obtain the precoding matrix based on the first mapping relationship or the second mapping relationship, thereby flexibly configuring the mapping relationship between the reference signal port and the PMI port, so as to avoid a problem of relatively large overheads of the reference signals.

### BRIEF DESCRIPTION OF THE DRAWINGS

FIG. 1 is a block diagram of a wireless communication system to which an embodiment of this application may be applied;
FIG. 2 is a schematic flowchart of a method for obtaining a precoding matrix according to an embodiment of this application;
FIG. 3 is another schematic flowchart of a method for obtaining a precoding matrix according to an embodiment of this application;
FIG. 4 is a schematic structural diagram of an apparatus for obtaining a precoding matrix according to an embodiment of this application;
FIG. 5 is another schematic structural diagram of an apparatus for obtaining a precoding matrix according to an embodiment of this application;
FIG. 6 is a schematic structural diagram of a communication device according to an embodiment of this application;
FIG. 7 is a schematic diagram of a hardware structure of a terminal according to an embodiment of this application; and
FIG. 8 is a schematic diagram of a hardware structure of a network side device according to an embodiment of this application.

### DETAILED DESCRIPTION

Technical solutions in embodiments of this application are clearly described below with reference to accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in this application are used for distinguishing between similar objects rather than describing a specific order or sequence. It should be understood that the terms used in this way may be transposed where appropriate, so that embodiments of this application can be implemented in a sequence other than those illustrated or described herein. In addition, objects defined by "first" and "second" are generally of the same class and do not limit a quantity of objects. For example, one or more first objects may be arranged. In addition, "or" in this application indicates at least one of connected objects. For example, "A or B" encompasses three solutions: solution I: A is included but B is not included; solution II: B is included but A is not included; and solution III: both A and B are included. The character "/" generally indicates an "or" relationship between a preceding associated object and a succeeding associated object.

A term "indication" in this application may be a direct indication (or an explicit indication) or an indirect indication (or an implicit indication). The direct indication may be understood as that a sending party clearly informs a receiving party of specific information, an operation to be performed, or a request result in the sent indication. The indirect indication may be understood as that the receiving party determines corresponding information based on an indication sent by the sending party, or makes a determination and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, or another system. Terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. Nevertheless, the technologies may also be applied to a system other than the NR system, such as a 6^{th} generation (6^{th} Generation, 6G) communication system.

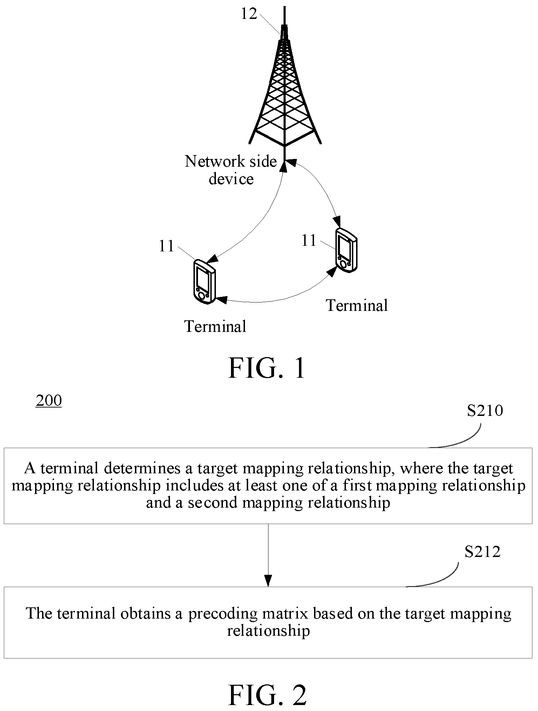

FIG. 1 is a block diagram of a wireless communication system to which an embodiment of this application may be applied. The wireless communication system includes a terminal 11 and a network side device 12. The terminal 11 may be a terminal side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR), a virtual reality (Virtual Reality, VR) device, a robot, a wearable device (Wearable Device), a flight vehicle (flight vehicle), an on-board device (Vehicle User Equipment, VUE), a shipborne device, a pedestrian terminal (Pedestrian User Equipment, PUE), a smart home appliance (a home device with a wireless communication capability, such as a refrigerator, a television, a washing machine, or furniture), a game console, a personal computer (Personal Computer, PC), a teller machine, or a self-service machine. The wearable device includes a smart watch, a smart bracelet, a smart headset, smart glasses, smart jewelry (a smart bracelet, a smart chain bracelet, a smart ring, a smart necklace, a smart ankle bangle, a smart ankle chain, and the like), a smart wristband, smart clothing, and the like. The on-board device may also be referred to as an on-board terminal, an on-board controller, an on-board module, an on-board component, an on-board chip, an on-board unit, or the like. It should be noted that a specific type of the terminal 11 is not limited in embodiments of this application. The network side device 12 may include an access network device or a core network device. The access network device may also be referred to as a radio access network (Radio Access Network, RAN) device, a wireless access network function, or a wireless access network unit. The access network device may include a base station, a wireless local area network (Wireless Local Area Network, WLAN) access point (Access Point, AP), a wireless fidelity (Wireless Fidelity, WiFi) node, or the like. The base station may be referred to as a node B (Node B, NB), an evolved Node B (Evolved Node B, eNB), a next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission receiving point (Transmission Reception Point, TRP), or another appropriate term in the art. The base station is not limited to a specific technical term, as long as the same technical effect can be achieved. It should be noted that, in embodiments of this application, only a base station in an NR system is used as an example for description, and a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), a location management function (Location Management Function, LMF), a gateway mobile location centre (Gateway Mobile Location Centre, GMLC), a network data analytics function (Network Data Analytics Function, NWDAF), and the like. It should be noted that, in embodiments of this application, only a core network device in the NR system is used as an example for description, and a specific type of the core network device is not limited.

To better understand the technical solutions provided in this application, the related art involved in this application is first described.

### 1. CSI architecture

Generally, the CSI architecture may be divided into two parts: downlink CSI and uplink CSI. A downlink CSI architecture includes a downlink physical channel and a downlink reference signal. An uplink CSI architecture includes an uplink physical channel and an uplink reference signal.

The downlink physical channel is usually used for data transmission, and the downlink reference signal is usually used for channel estimation to obtain downlink channel state information (CSI). The uplink physical channel is usually used for uplink data transmission, and the uplink reference signal is usually used for channel estimation to obtain uplink channel state information (CSI).

In a 5G system, the CSI is mainly used for adaptive beamforming and multiple input multiple output (Multiple Input Multiple Output, MIMO) technologies, so as to improve a wireless transmission bandwidth and reliability.

In conclusion, a 5G CSI architecture is a very important technology in a 5G communication system, and plays an important role in aspects such as improving a wireless transmission bandwidth and reliability, and interference coordination.

### 2. CSI report content

Generally, the terminal may determine, through higher-layer signaling or a default rule, that a CSI report may include one of: 'none', 'cri-ri-pmi-cqi', 'cri-RI-i1', 'cri-RI-CQI', 'cri-RSRP', 'cri-SINR', 'ssb-Index-RSRP', 'ssb-Index-SINR', or 'cri-RI-LI-PMI-CQI'.

If the terminal is configured with CSI-ReportConfig, and an upper-layer parameter reportQuantity is set to "none", the terminal does not report any content for the CSI-ReportConfig.

If a reportQuantity field in a higher-layer parameter CSI-ReportConfig is set to 'cri-RI-CQI', the terminal assumes that a precoding matrix indicator (Precoding matrix indicator, the PMI is a unit matrix) only needs to report a CSI reference signal (CSI Reference Signal, CSI-RS) resource indicator (CSI-RS Resource Indicator, CRI), a rank indicator (Rank indicator, RI), and a channel quality indicator (Channel quality indicator, CQI), and does not need to report the PMI.

A type2 series of CSI reports carried on a physical uplink shared channel (Physical Uplink Shared Channel, PUSCH) are usually divided into two parts: a CSI report part 1 and a CSI report part 2. Each part is independently coded, and a size of the CSI report part 2 may be determined through the CSI report part 1.

### 3. PMI obtaining

For PMI obtaining, at least for a type1 series of codebooks and an R16/R17 type2 series of codebooks, a protocol agrees that the terminal obtains the PMI based on one configured CSI-RS or one selected CSI-RS. Equivalently, PMI port numbers are mapped to CSI-RS port numbers in a one-to-one manner in ascending order. To be specific, a first row of PMI corresponds to a CSI-RS port 3000, and a second row corresponds to a CSI-RS port 3001, and so on. A mapping manner between the PMI port numbers and the CSI-RS port numbers is fixed.

For a PMI codebook of R18 coherent joint transmission (coherent joint transmission, CJT), the protocol agrees that the terminal obtains the PMI based on a maximum of four configured CSI-RSs. Equivalently, the PMI port numbers are successively mapped to each CSI-RS port number in a one-to-one manner in ascending order based on CSI-RS configuration order. To be specific, assuming that one CSI-RS is associated with two CSI-RS ports, a first row of PMI corresponds to a first CSI-RS port 3000, a second row corresponds to a first CSI-RS port 3001, a third row corresponds to a second CSI-RS port 3000, a fourth row corresponds to a second CSI-RS port 3001, and so on.

For network energy saving, a plurality of CSI report sub-configurations configured by the network side device may be supported in sharing at least one reference signal, and the network side device indicates, through a bit sequence, a reference signal port number associated with a PMI of a specific sub-configuration of the terminal. If a network is configured with a plurality of reference signals, the terminal selects one of the reference signals, and then obtains the PMI based on a port indication bit sequence.

Based on the above, in the related art, a mapping relationship between the reference signal port and the PMI port cannot be flexibly configured, which may cause a problem of relatively large overheads of the reference signal. In view of the problem, embodiments of this application provide a solution for obtaining a precoding matrix.

The solution for obtaining a precoding matrix provided in embodiments of this application is described in detail below through some embodiments and application scenarios with reference to the accompanying drawings.

FIG. 2 is a schematic flowchart of a method for obtaining a precoding matrix according to an embodiment of this application. The method 200 may be performed by the terminal. In other words, the method may be performed by software or hardware installed in the terminal. As shown in FIG. 2, the method may include the following steps.

S210: The terminal determines a target mapping relationship, where the target mapping relationship includes at least one of a first mapping relationship and a second mapping relationship.

The first mapping relationship is a mapping relationship between a plurality of available reference signal port numbers of a plurality of reference signals and a PMI port number, and the second mapping relationship is a mapping relationship between at least some reference signal port numbers of one reference signal and the PMI port number.

One of the plurality of reference signals in the first mapping relationship may correspond to one available reference signal port number, or one of the plurality of reference signals may correspond to a plurality of available reference signal port numbers. In the second mapping relationship, one reference signal may correspond to a plurality of reference signal port numbers, and the second mapping relationship may include mapping relationships between some or all of reference signal port numbers corresponding to the reference signal and the PMI port number.

The plurality of available reference signal port numbers may be all of available reference signal port numbers of the plurality of reference signals. The terminal may determine, according to network signaling or a protocol agreement, how to map all of available reference signal port numbers of the plurality of reference signals to the PMI port number. Alternatively, the terminal determines to performs permutation and combination on channels or channel vectors obtained from all of available reference signal ports of the plurality of reference signals, and then obtains the PMI based on a permutated and combined channel or channel matrix. To be specific, all of available reference signal port numbers of the plurality of reference signals are mapped to the PMI port number.

In embodiments of this application, the mapping relationship between the reference signal port numbers and the PMI port number may be resolved through the target mapping relationship. On one hand, the network side device and the terminal have a consistent understanding of the mapping relationship between the reference signal port numbers and the PMI port number, to avoid a case in which the network side device incorrectly uses the PMI fed back by the terminal to cause a performance loss. On another hand, the network side device may configure the reference signals more flexibly, and support that the reference signal port numbers are not mapped to the PMI port number in a one-to-one manner by explicating the mapping relationship. To be specific, a plurality of reference signal port numbers may correspond to one PMI port number. On still another hand, reference signal overheads can be reduced by explicating the mapping relationship. To be specific, the mapping relationship is determined, so that the network side device and the terminal have a consistent understanding of the mapping relationship between the reference signal port numbers associated with one reference signal or a plurality of reference signals and the PMI port number, without using a plurality of groups or a plurality of reference signals, where each group or each reference signal matches a different codebook or a different PMI.

The PMI port number may be a row number of a precoding matrix associated with the PMI, may be a group of port numbers agreed on in the protocol, or may be a group of sequence numbers counting from 0 or 1, for example, {0, 1, 2...N-1}, where N indicates a quantity of rows of the precoding matrix. For another example, if the network side device configures a quantity N1 of PMI ports in a first direction and a quantity N2 of PMI ports in a second direction, with P*N1*N2 port numbers in total, where P is a positive integer and may indicate a quantity of antenna polarization directions, a PMI port number n may be indicated as n=N1*N2*p+N1*n2+n1, n=N1*N2*p+N2*n1+n2, or n=0, 1, ..., P*N1*N2-1, where n1=0, 1, ..., N1-1, n2=0,1, ..., N2-1, and p=0,1, ..., P-1. For another example, if the network side device configures a quantity N1 of PMI ports in the first direction, a quantity N2 of PMI ports in the second direction, and a first quantity Ng, with P*N1*N2*Ng port numbers in total, where P is a positive integer and may indicate a quantity of antenna polarization directions, and Ng is a positive integer and may indicate a quantity of antenna panels, a PMI port number n may be indicated as n=ng*N1*N2*P+N1*N2*p+N1*n2+n1, n=ng*N1*N2*P+N1*N2*p+N2*n1+n2, or n=0, 1 ,..., Ng*P*N1*N2-1, where n1=0, 1, ..., N1-1, n2=0, 1, ..., N2-1, p=0, 1 ..., P-1, and ng=0, 1, ..., Ng-1.

The reference signal port numbers are a group of port numbers agreed on in the protocol. For example, the port numbers are usually {3000, ..., 3000+P-1}, where P indicates a quantity of reference signal ports of one reference signal. For another example, the port numbers are usually {3000, ..., 3000+M*P-1}, where P indicates a quantity of reference signal ports of one reference signal, and M indicates a quantity of reference signals.

S212: The terminal obtains a precoding matrix based on the target mapping relationship.

In embodiments of this application, the precoding matrix may also be one of the following: a precoding matrix indication, a feedback amount of the precoding matrix indication, and a feedback amount of the precoding matrix.

In S212, the terminal may obtain the precoding matrix or each value of a row vector corresponding to the PMI port number based on the reference signal port corresponding to each PMI port number. For example, the terminal obtains a channel associated with each PMI port number by measuring a reference signal on the reference signal port corresponding to each PMI port number, and further, obtains the precoding matrix or obtains each feedback value of a row corresponding to a to-be-fed-back precoding matrix.

Through the technical solutions provided in embodiments of this application, the terminal may determine a first mapping relationship between a plurality of available reference signal port numbers of a plurality of reference signals and a precoding matrix indicator PMI port number, or a second mapping relationship between at least some reference signal port numbers of one reference signal and the PMI port number, and then obtain the precoding matrix based on the first mapping relationship or the second mapping relationship, thereby flexibly configuring the mapping relationship between the reference signal port and the PMI port, so as to avoid a problem of relatively large overheads of the reference signals.

In an implementation, the terminal may determine the first mapping relationship through at least one of the following:
(1) a configuration order of the plurality of reference signals;
(2) identifiers of the plurality of reference signals, for example, reference signal IDs; and
(3) N port groups associated with an available reference signal port of each of the plurality of reference signals, where N is an integer greater than 1.

In an implementation, the terminal may map the plurality of available reference signal port numbers of the plurality of reference signals to the PMI port number in a mapping manner 1 through the configuration order of the plurality of reference signals, to obtain a first mapping relationship. The mapping manner 1 is as follows: the available reference signal port numbers of each reference signal are successively mapped to the PMI port numbers in a one-to-one manner in ascending order based on the configuration order of the plurality of reference signals.

Optionally, in the mapping manner 1, mapping may be performed as shown in Table 1. A second column in Table 1 is successively mapped to PMI port numbers *a*₀, *a*₁, *a*₂, ..., and *a*_{*N*ₚ-1} in top-to-bottom order, where *Nₚ* represents a quantity of PMI ports or a quantity of rows of the precoding matrix.

**Table 1.**

| PMI port numbers | Order of reference signal resource ports |
|---|---|
| *a*₀ | All available ports of a first configured reference signal are sorted in ascending order of reference signal port numbers |
| *a*₁ | |
| *a*₂ | All available ports of a second configured reference signal are sorted in ascending order of reference signal port numbers |
| ... | |
| | ... |
| *a*_{*N*ₚ-1}, | |
| | All available ports of an i^{th} configured reference signal are sorted in ascending order of reference signal port numbers |
| | ... |

When all reference signal port numbers are available, the terminal successively maps all reference signal port numbers of each reference signal to the PMI port numbers in a one-to-one manner in ascending order based on the configuration order of the plurality of reference signals.

For example, all ports {3000, ..., 3000+P1-1} of the first configured reference signal are first mapped to the PMI port numbers {0, ..., P1-1}, then all ports {3000, ..., 3000+P2-1} of the second configured reference signal are mapped to the PMI port numbers {P1, ..., P1+P2-1}, and so on. Pi represents a quantity of ports of the i^{th} configured reference signal. Optionally, different reference signals may have different quantities of signal ports.

For another example, the terminal determines a PMI port number idx associated with a (j+1)^{th} reference signal port of the i^{th} configured reference signal according to a formula $idx = {\sum }_{k = 1}^{i - 1} {P}_{k} + j$ or idg = (*i* - 1)*P* + *j*, where *Pₖ* represents a quantity of ports of a k^{th} configured reference signal, and P represents a quantity of ports of each reference signal.

For another example, the terminal determines a PMI port number idx associated with a reference signal with a port number of j of the i^{th} configured reference signal according to a formula $idx = {\sum }_{k = 1}^{i - 1} {P}_{k} + j - M$ or idx = (*i* - 1)*P* + *j* - *M,* where *Pₖ* represents a quantity of ports of the k^{th} configured reference signal, P represents a quantity of ports of each reference signal, and M represents a minimum value or a starting port number of a reference signal port number.

In an implementation, the terminal may map the plurality of available reference signal port numbers of the plurality of reference signals to the PMI port numbers in a mapping manner 2 through the identifiers of the plurality of reference signals, to obtain a first mapping relationship. The mapping manner 2 is as follows: the available reference signal port numbers of each reference signal are successively mapped to the PMI port numbers in ascending order in a one-to-one manner in ascending order of the identifiers of the plurality of reference signals.

Optionally, in the foregoing implementation, in the mapping manner 2, mapping may be performed in a manner shown in Table 2. A second column in Table 2 is successively mapped to PMI port numbers *a*₀, *a*₁, *a*₂, ..., and *a*_{*N*ₚ-1} in top-to-bottom order, where *Nₚ* represents a quantity of PMI ports or a quantity of rows of the precoding matrix.

**Table 2.**

| PMI port numbers | Order of reference signal resource ports |
|---|---|
| *a*₀ | All available ports of a reference signal with a smallest reference signal ID are sorted in ascending order of reference signal port numbers |
| *a*₁ | |
| *a*₂ | |
| | All available ports of a reference signal with a second smallest reference signal ID are sorted in ascending order of reference signal port numbers |
| ... | |
| *a*_{*N*ₚ-1} | |
| | ... |
| | All available ports of a reference signal with an i^{th} smallest reference signal ID are sorted in ascending order of reference signal port numbers |
| | ... |

When all reference signal port numbers of the plurality of reference signals are available, the terminal successively maps all reference signal port numbers of each reference signal to the PMI port numbers in a one-to-one manner in ascending order based on the identifiers of the plurality of reference signals.

For example, all ports {3000, ..., 3000+P1-1} of the reference signal with the smallest reference signal ID are first mapped to the PMI port numbers {0, ..., P1-1}, then all ports {3000, ..., 3000+P2-1} of the reference signal with the second smallest reference signal ID are mapped to the PMI port numbers {P1, ..., P1+P2-1}, and so on. Pi represents a quantity of ports of the reference signal with the i^{th} smallest reference signal ID. Optionally, different reference signals may have different quantities of signal ports.

In embodiments of this application, the reference signal with the i^{th} smallest reference signal ID refers to a reference signal corresponding to the i^{th} reference signal ID after the plurality of reference signals are sorted in ascending order of the reference signal IDs. Meanings expressed in the following similar expression manners are the same as that expressed herein.

For another example, the terminal determines a PMI port number idx associated with a (j+1)^{th} reference signal port of the reference signal with the i^{th} smallest reference signal ID according to a formula $idx = {\sum }_{k = 1}^{i - 1} {P}_{k} + j$ or $idx = \left(i-1\right) P + j$, where *Pₖ* represents a quantity of ports of the reference signal with a k^{th} smallest reference signal ID, and P represents a quantity of ports of each reference signal.

For another example, the terminal determines a PMI port number idx associated a reference signal port with a port number of j of the reference signal with the i^{th} smallest reference signal ID according to a formula $idx = {\sum }_{k = 1}^{i - 1} {P}_{k} + j - M$ or idx=(*i* - 1)*P* + *j* - *M*, where *Pₖ* represents a quantity of ports of the reference signal with the k^{th} smallest reference signal ID, P represents a quantity of ports of each reference signal, and M represents a minimum value of a reference signal port number, or a starting port number.

In an implementation, the terminal may map the plurality of available reference signal port numbers of the plurality of reference signals to the PMI port numbers in a mapping manner 3 through N port groups associated with the available reference signal ports of each of the plurality of reference signals, to obtain a first mapping relationship. The mapping manner 3 is as follows: the available reference signal ports of each of the plurality of reference signals are evenly divided into N port groups in ascending order. For an i^{th} port group of the plurality of reference signals, available port numbers in the i^{th} port group of each reference signal are mapped to the PMI port numbers in one-to-one manner in ascending order based on the configuration order of the plurality of reference signals, and the N port groups are successively mapped to the PMI port groups based on an order of the port groups, where i=1, 2, ..., and N.

N is obtained through network signaling. Optionally, N may represent N polarization directions, or N represents N antenna panels, or N is equal to M*P, where M represents M antenna panels, and P represents P polarization directions of each antenna panel.

Optionally, in the foregoing implementation, in the mapping manner 3, mapping may be performed in a manner shown in Table 3. A second column in Table 3 is successively mapped to PMI port numbers *a*₀, *a*₁, *a*₂, ..., and *a*_{*N*ₚ-1} in top-to-bottom order, where *Nₚ* represents a quantity of PMI ports or a quantity of rows of the precoding matrix.

**Table 3.**

| PMI port numbers | Order of reference signal resource ports |
|---|---|
| *a*₀ | All ports of a first port group G0 reference signal of a first configured reference signal are sorted in ascending order of reference signal port numbers |
| *a*₁ | |
| *a*₂ | |
| | All ports of a first port group G0 reference signal of a second configured reference signal are sorted in ascending order of reference signal port numbers |
| ... | |
| *a*_{*N*ₚ-1} | |
| | ... |
| | All ports of a first port group G0 reference signal of an i^{th} configured reference signal are sorted in ascending order of reference signal port numbers |
| | ... |
| | All ports of an n^{th} port group G_n-1 reference signal of the first configured reference signal are sorted in ascending order of reference signal port numbers |
| | All ports of an n^{th} port group G_n-1 reference signal of the second configured reference signal are sorted in ascending order of reference signal port numbers |
| | ... |
| | All ports of an n^{th} port group G_n-1 reference signal of the i^{th} configured reference signal are sorted in ascending order of reference signal port numbers |
| | ... |

When all reference signal port numbers are available, the terminal evenly divides all reference signal ports into N port groups {G0, ..., GN-1} in ascending order of the port numbers. For a same port group Gn (n=0, ..., N-1), the available port numbers of each reference signal are successively mapped to the PMI port numbers in a one-to-one manner in ascending order based on the configuration order of the reference signals.

For example, if network higher-layer signaling indicates that each reference signal is associated with two polarization directions, the terminal may evenly divide the ports of each reference signal into two port groups {G0, G1} in ascending order of the port numbers. For the mapping from the reference signal ports to the PMI ports, all ports {3000, ..., 3000+P_{0, 1}-1] of the G0 port group of the first configured reference signal are first mapped to the PMI port numbers {0, ..., P_{0, 1}-1} in a one-to-one manner, then all ports {3000, ..., 3000+ P_{0, 2}-1] of the G0 port group of the second configured reference signal are mapped to the PMI port numbers {P_{0, 1}, ..., P_{0, 1}+P_{0, 2}-1}, and so on. After the G0 port groups of all reference signals are mapped, one-to-one mapping is performed on G1 port groups of all reference signals in the same manner. P_{j, i} represents a quantity of ports of a port group Gj of the i^{th} configured reference signal. Optionally, quantities of available reference signal ports of different reference signals may be different, or quantities of ports in port groups of different reference signals may be different.

For another example, if the network higher-layer signaling indicates that each reference signal is associated with two polarization directions and two antenna panels, the terminal may evenly divide the ports of each reference signal into four port groups {G0, G1, G2, G3} in ascending order of the port numbers, where G0 and G1 are associated with two polarization directions of an antenna panel 1, and G2 and G3 are associated with two polarization directions of an antenna panel 2. For the mapping from the reference signal ports to the PMI ports, all ports {3000, ..., 3000+P_{0, 1}-1] of the G0 port group of the first configured reference signal are first mapped to the PMI port numbers {0, ..., P_{0, 1}-1} in a one-to-one manner, then all ports {3000, ..., 3000+ P_{0, 2}-1] of the G0 port group of the second configured reference signal are mapped to the PMI port numbers {P_{0, 1}, ..., P_{0, 1}+P_{0, 2}-1}, and so on. After the G0 port groups of all reference signals are mapped, one-to-one mapping is successively performed on G1/G2/G3 port groups of all reference signals in the same manner. P_{j, i} represents a quantity of ports of a port group Gj of the i^{th} configured reference signal. Optionally, quantities of available reference signal ports of different reference signals may be different, or quantities of ports in port groups of different reference signals may be different.

In an implementation, the terminal may map the plurality of available reference signal port numbers of the plurality of reference signals to the PMI port numbers in a mapping manner 4 through the N port groups associated with the available reference signal ports of each of the plurality of reference signals, so as to obtain the first mapping relationship. The mapping manner 4 is that the terminal evenly divides the available reference signal ports of each of the plurality of reference signals into N port groups in ascending order, successively maps, for a j^{th} port group of the plurality of reference signals and in ascending order of the identifiers of the plurality of reference signals, the available port numbers in the j^{th} port group of each reference signal to the PMI port numbers in a one-to-one manner in ascending order, and successively maps the N port groups to the PMI port groups in order of the port groups, where j=1, 2, ..., and N.

Optionally, N is obtained through the network signaling. Optionally, N may indicate N polarization directions, or N indicates N antenna panels, or N is equal to M*P, where M indicates M antenna panels, and P indicates P polarization directions of each antenna panel.

Optionally, in the foregoing implementation, in the mapping manner 4, mapping may be performed as shown in Table 4. A second column in Table 4 is successively mapped to the PMI port numbers a₀ , *a*₁ , *a*₂ , ..., and *a*_{*N*ₚ-1} in top-to-bottom order, where *Nₚ* indicates a quantity of PMI ports or a quantity of rows of the precoding matrix.

**Table 4.**

| PMI port numbers | Order of reference signal resource ports |
|---|---|
| *a*₀ | All ports of the first port group G0 reference signal of the reference signal with the smallest reference signal ID are sorted in ascending order of reference signal port numbers |
| *a*₁ | |
| *a*₂ | |
| | All ports of the first port group G0 reference signal of the reference signal with the second smallest reference signal ID are sorted in ascending order of reference signal port numbers |
| ... | |
| *a*_{*N*ₚ-1} | |
| | ... |
| | All ports of the first port group G0 reference signal of the reference signal with the i^{th} smallest reference signal ID are sorted in ascending order of reference signal port numbers |
| | ... |
| | All ports of the n^{th} port group G_n-1 reference signal of the reference signal with the smallest reference signal ID are sorted in ascending order of reference signal port numbers |
| | All ports of the n^{th} port group G_n-1 reference signal of the reference signal with the second smallest reference signal ID are sorted in ascending order of reference signal port numbers |
| | ... |
| | All ports of the n^{th} port group G_n-1 reference signal of the reference signal with the i^{th} smallest reference signal ID are sorted in ascending order of reference signal port numbers |
| | ... |

When all reference signal port numbers are available, all reference signal ports are evenly divided into N port groups {G0, ..., GN-1} in ascending order of the port numbers. For the same port group Gn (n=0, ..., N-1), the port numbers of each reference signal are successively mapped to the PMI port numbers in a one-to-one manner in ascending order of the reference signal IDs.

For example, if network higher-layer signaling indicates that each reference signal is associated with two polarization directions, the terminal may evenly divide the ports of each reference signal into two port groups {G0, G1} in ascending order of the port numbers. For mapping from the reference signal ports to the PMI ports, all ports {3000, ..., 3000+P_{0, 1}-1] of the G0 port group of the reference signal with the smallest reference signal ID are first mapped to the PMI port numbers {0, ..., P_{0, 1}-1} in a one-to-one manner, all ports {3000, ..., 3000+ P_{0, 2}-1] of the G0 port group of the reference signal with the second smallest reference signal ID are mapped to the PMI port numbers {P_{0, 1}, ..., P_{0, 1}+P_{0, 2}-1}, and so on. After the G0 port groups of all reference signals are mapped, one-to-one mapping is performed on the G1 port groups of all reference signals in the same manner. P_{j, i} indicates a quantity of ports of the port group Gj of the reference signal with the i^{th} smallest reference signal ID. Optionally, a quantity of available reference signal ports of different reference signals may be different, or a quantity of ports in port groups of different reference signals may be different.

For another example, if the network higher-layer signaling indicates that each reference signal is associated with two polarization directions and two antenna panels, the terminal may evenly divide the ports of each reference signal into four port groups {G0, G1, G2, G3} in ascending order of the port numbers, where G0 and G1 are associated with two polarization directions of an antenna panel 1, and G2 and G3 are associated with two polarization directions of an antenna panel 2. For mapping from the reference signal ports to the PMI ports, all ports {3000, ..., 3000+P_{0, 1}-1] of the G0 port group of the reference signal with the smallest reference signal ID are first mapped to the PMI port numbers {0, ..., P_{0, 1}-1} in a one-to-one manner, all ports {3000, ..., 3000+ P_{0, 2}-1] of the G0 port group of the reference signal with the second smallest reference signal ID are mapped to the PMI port numbers {P_{0, 1}, ..., P_{0, 1}+P_{0, 2}-1}, and so on. After the G0 port groups of all reference signals are mapped, one-to-one mapping is successively performed on the G1/G2/G3 port groups of all reference signals in the same manner. P_{j, i} indicates a quantity of ports of the port group Gj of the reference signal with the i^{th} smallest reference signal ID. Optionally, a quantity of available reference signal ports of different reference signals may be different, or a quantity of ports in port groups of different reference signals may be different.

The available ports of each reference signal included in the foregoing mapping manner 3 or mapping manner 4 are evenly divided into N port groups {G0, ..., GN-1} in ascending order of the port numbers. A possible implementation is that N indicates N polarization directions. To be specific, the terminal evenly divides, based on a quantity N of polarization directions indicated by the network or agreed on in the protocol, the available ports of each reference signal into N port groups in ascending order of the port numbers. Another possible implementation is that N indicates N antenna panels or N subarrays or N TRPs. To be specific, the terminal evenly divides, based on a quantity of antenna panels or a quantity of subarrays or a quantity N of TRPs indicated by the network or agreed on in the protocol, the available ports of each reference signal into N port groups in ascending order of the port numbers. Another possible implementation is that N indicates a product of a quantity of the antenna panels or a quantity of the subarrays or a quantity of the TRPs and a quantity of the polarization directions. To be specific, the terminal evenly divides, based on a quantity M of the antenna panels (or a quantity of the subarrays or a quantity of the TRPs) and a quantity P of polarizations indicated by the network or agreed on in the protocol, the available ports of each reference signal into N=M*P port groups in ascending order of the port numbers.

In addition, optionally, before the terminal determines the first mapping relationship, the terminal determines the mapping manner between the plurality of available reference signal port numbers of the plurality of reference signals and the PMI port number based on the first network signaling. In this optional implementation, the terminal may determine the mapping manner between the reference signal port and the PMI port through the first network signaling. A possible implementation is that the terminal indicates, through the first network signaling, that a mapping manner is selected from at least one mapping manner of the mapping manner 1 to the mapping manner 4 above. For example, if the network indicates, through the higher-layer signaling, that the precoding matrix is associated with the N antenna panels, the terminal determines the mapping relationship between the reference signal port and the PMI port based on the mapping manner 3.

In an implementation, before the terminal determines the first mapping relationship, the method may further include: The terminal determines the plurality of available reference signal port numbers of the plurality of reference signals or at least one available reference signal port number of each of the plurality of reference signals. In embodiments of this application, the available reference signal port number may be understood as that the terminal determines, based on a network indication, to select some of all reference signal ports of the plurality of reference signals to obtain the precoding matrix. Before obtaining the precoding matrix, the terminal determines the mapping relationship between some reference signal port numbers of the plurality of reference signals or the available reference signal port numbers and the PMI port number.

Optionally, the terminal may determine the plurality of available reference signal port numbers of the plurality of reference signals or at least one available reference signal port number of each of the plurality of reference signals through at least one of the following implementations 1 to 3.

Implementation 1: The terminal obtains some of the plurality of reference signals based on second network signaling, and determines that all reference signal port numbers of some reference signals are the plurality of available reference signal port numbers, or determines that all available reference signal port numbers of some reference signals are the plurality of available reference signal port numbers. In the implementation, the network side device indicates some of the plurality of reference signals to the terminal through the second network signaling. The terminal determines a mapping relationship between the reference signal port number and the PMI port number based on some reference signals, and further obtains a precoding matrix. In this manner, the network side device may obtain CSI when some reference signal ports are active, which facilitates transmission performance when the network side device disables some reference signal ports.

After all available reference signal ports are determined according to the foregoing implementation 1, the terminal may obtain the mapping relationship between each available reference signal port and the PMI port by using at least one of the mapping manners.
1). Available port numbers of each reference signal are successively mapped to the PMI port numbers in a one-to-one manner in ascending order based on the configuration order of the reference signals.
2). The available port numbers of each reference signal are successively mapped, in ascending order of reference signal IDs, to the PMI port numbers in a one-to-one manner in ascending order.
3). Available ports of each reference signal are evenly divided into N port groups {G0, ..., GN-1} in ascending order of the port numbers. For the same port group Gn (n=0, ..., N-1), the port numbers of each reference signal are successively mapped to the PMI port numbers in a one-to-one manner in ascending order based on the configuration order of the reference signals. N port groups are successively mapped to the PMI port numbers in order of the port groups.
4). Available ports of each reference signal are evenly divided into N port groups {G0, ..., GN-1} in ascending order of the port numbers. For the same port group Gn (n=0, ..., N-1), the port numbers of each reference signal are successively mapped, in ascending order of the reference signal IDs, to the PMI port numbers in a one-to-one manner in ascending order. N port groups are successively mapped to the PMI port numbers in order of the port groups.

Implementation 2: The terminal obtains a reference signal port group of each of the plurality of reference signals based on third network signaling, and determines the plurality of available reference signal port numbers based on the reference signal port group of each of the plurality of reference signals. In the implementation, the terminal may evenly divide, based on the network signaling or the protocol agreement, all reference signal ports of each reference signal into N port groups {D0, ..., D_N-1} in ascending order of the port numbers. Further, the network side device may indicate some of the plurality of reference signal port groups to the terminal through the third network signaling. The terminal determines the plurality of available reference signal port numbers based on some reference signal groups, obtains the mapping relationship between the plurality of available reference signal ports and the PMI port numbers, and further obtains a precoding matrix. In this manner, the network side device may obtain CSI when some reference signal ports are active, which facilitates transmission performance when the network disables some reference signal ports.

All reference signal ports of each reference signal are evenly divided into N port groups {D0, ..., D_N-1} in ascending order of the port numbers. A possible implementation is that N represents N polarization directions. To be specific, the terminal evenly divides, based on a quantity N of polarization directions indicated by the network or agreed on in the protocol, the ports of each reference signal into N port groups in ascending order of the port numbers. Another possible implementation is that N represents N antenna panels or N subarrays or N transmission and reception points (Transmission and Reception Points, TRPs). To be specific, the terminal evenly divides the ports of each reference signal into N port groups in ascending order of the port numbers based on a quantity of antenna panels or a quantity of subarrays or a quantity N of TRPs indicated by the network or agreed on in the protocol. Still another possible implementation is that N represents a product of a quantity of antenna panels or a quantity of subarrays or a quantity of TRPs and a quantity of polarization directions. To be specific, the terminal evenly divides the ports of each reference signal into N=M*P port groups in ascending order of the port numbers based on a quantity M of the antenna panels (or the quantity of subarrays or the quantity of TRPs) and a quantity P of polarizations indicated by the network or agreed on in the protocol. Still another possible implementation is that N represents N code division multiplexing (Code Division Multiplexing, CDM) groups (group). To be specific, the terminal classifies, into a group based on a reference signal pattern (pattern), reference signal ports belonging to the same CDM group. Still another possible implementation manner is that the network indicates a quantity K1 of ports of each port group through signaling, and the terminal classifies each K1 ports into a port group in ascending order of the reference signal port numbers.

The network side device indicates some of the plurality of reference signal port groups to the terminal through the third network signaling. Optionally, the terminal selects M port groups from the N port groups based on the network signaling. The third network signaling may be a bit sequence, where the bit sequence has a length of N and is successively associated with the N port groups.

After all available reference signal port numbers are determined according to the foregoing implementation 2, the mapping relationship between all available reference signal port numbers and the PMI port numbers may be obtained based on at least one of the following mapping manners.
1) Port numbers associated with the M port groups selected for each reference signal are successively mapped to the PMI port numbers in a one-to-one manner in ascending order based on the configuration order of the reference signals.
2) The port numbers associated with the M port groups selected for each reference signal are successively mapped, in ascending order of reference signal IDs, to the PMI port numbers in a one-to-one manner in ascending order.
3) For the selected M port groups, for the same port group Gn (n=0, ..., N-1), the port numbers of each reference signal are successively mapped to the PMI port numbers in a one-to-one manner in ascending order based on the configuration order of the reference signals. The M port groups are successively mapped to the PMI port numbers in order of the port groups.
4) For the selected M port groups, for the same port group Gn (n=0, ..., N-1), the port numbers of each reference signal are successively mapped, in ascending order of the reference signal IDs, to the PMI port numbers in a one-to-one manner in ascending order. The M port groups are successively mapped to the PMI port numbers in order of the port groups.

Implementation 3: The terminal obtains a reference signal port of each of the plurality of reference signals based on fourth network signaling, and determines the plurality of available reference signal port numbers based on the reference signal port of each of the plurality of reference signals. In the implementation, the network side device may indicate, to the terminal through the fourth network signaling, the available reference signal ports selected for each of the plurality of reference signals. The available reference signal ports of each reference signal may be some or all of the reference signal ports of the reference signal. The terminal determines the plurality of available reference signal port numbers based on the available reference signal ports of each reference signal, obtains the mapping relationship between the plurality of available reference signal ports and the PMI port numbers, and further obtains a precoding matrix. In this manner, the network side device may obtain CSI when some reference signal ports in a reference signal are active, which facilitates transmission performance when the network side device disables some reference signal ports.

After all available reference signal port numbers are determined according to the foregoing implementation 3, the mapping relationship between all available reference signal port numbers and the PMI port numbers may be obtained based on at least one of the following mapping manners.
1) Port numbers associated with the M port groups selected for each reference signal are successively mapped to the PMI port numbers in a one-to-one manner in ascending order based on the configuration order of the reference signals.
2) The port numbers associated with the M port groups selected for each reference signal are successively mapped, in ascending order of reference signal IDs, to the PMI port numbers in a one-to-one manner in ascending order.
3) For the selected M port groups, for the same port group Gn (n=0, ..., N-1), the port numbers of each reference signal are successively mapped to the PMI port numbers in a one-to-one manner in ascending order based on the configuration order of the reference signals. The M port groups are successively mapped to the PMI port numbers in order of the port groups.
4) For the selected M port groups, for the same port group Gn (n=0, ..., N-1), the port numbers of each reference signal are successively mapped, in ascending order of the reference signal IDs, to the PMI port numbers in a one-to-one manner in ascending order. The M port groups are successively mapped to the PMI port numbers in order of the port groups.

In actual application, the foregoing implementation 1, implementation 2, and implementation 3 may be combined with each other. For example, the terminal may select some reference signals from the plurality of reference signals based on the second network signaling, then obtain the available port numbers of each of some reference signals based on the third network signaling or the fourth network signaling, and use a sum of the available port numbers of each of some reference signals as the plurality of available reference signal port numbers of the plurality of reference signals.

In addition, optionally, the network side device may also indicate, through the higher-layer signaling, that the terminal determines the available reference signal ports. To be specific, the terminal selects the available reference signal ports from all reference signal ports. Further optionally, the terminal indicates, to the network side device, the available reference signal ports determined by the terminal, so that the network side device may learn which reference signal ports are selected by the terminal as the available reference signal ports, to avoid inconsistent understanding between the network side device and the terminal regarding the determined available reference signal ports.

Based on the second mapping relationship between at least some reference signal port numbers of one reference signal and the PMI port numbers, the terminal selects, based on the network signaling or the protocol agreement, at least some reference signal ports in all reference signal ports of one reference signal to obtain the precoding matrix. In an implementation, the terminal may determine the second mapping relationship based on at least one of the following:
1) The terminal obtains, based on fifth network signaling, some available reference signal ports within each code division multiplexing CDM group associated with the one reference signal, and determines the second mapping relationship between the at least some reference signal port numbers of the one reference signal and the PMI port number based on some available reference signal ports within a plurality of CDM groups associated with the one reference signal.
2) The terminal obtains an available CDM group associated with one reference signal based on sixth network signaling, and determines the second mapping relationship between the at least some reference signal port numbers of the one reference signal and the PMI port number based on at least one reference signal port associated with the obtained available CDM group.

For the foregoing 1), it may be understood that the network side device indicates, to the terminal through the fifth network signaling, an available reference signal port of each CDM group in all CDM groups associated with one reference signal, and the terminal determines the second mapping relationship between the reference signal port numbers and the PMI port numbers based on the available reference signal ports of all CDM groups, and further obtains the precoding matrix based on the second mapping relationship. In this manner, the network side device may obtain CSI when some reference signal ports are active, which facilitates transmission performance when the network disables some reference signal ports.

For the foregoing 1), after all available reference signal ports of one reference signal are determined, a possible mapping manner between the reference signal port numbers and the PMI port numbers may be that the available port numbers of the reference signals are successively mapped to the PMI port numbers in a one-to-one manner in ascending order. Alternatively, the available port numbers of the reference signals may be grouped, and are further successively mapped to the PMI port numbers in a one-to-one manner based on an order of a plurality of groups and an order of available port numbers within each group. For example, the order is a first port of a first group, a first port of a second group, ..., a second port of the first group, a second port of the second group, ..., and an M^{th} port of an N^{th} group, where N represents a quantity of groups, and M represents a quantity of ports within one group.

For the foregoing 2), it may be understood that the network side device indicates, to the terminal through the sixth network signaling, available CDM groups in all CDM groups associated with one reference signal, and the terminal determines the second mapping relationship between at least some reference signal port numbers of the one reference signal and the PMI port numbers based on the reference signal ports associated with the available CDM groups, and further obtains the precoding matrix based on the second mapping relationship. In this manner, the network side device may obtain CSI when some reference signal ports are active, which facilitates transmission performance when the network disables some reference signal ports.

For the foregoing 2), after the reference signal ports associated with the available CDM groups associated with one reference signal are determined, a possible mapping manner between the reference signal port numbers and the PMI port numbers is that the reference signal port numbers associated with the available CDM groups are successively mapped to the PMI port numbers in a one-to-one manner in ascending order. Alternatively, the available port numbers of the reference signals may be grouped, and are further successively mapped to the PMI port numbers in a one-to-one manner based on an order of a plurality of groups and an order of available port numbers within each group.

In an implementation, when determining the target mapping relationship, the terminal may further determine a power scaling factor associated with a PMI port corresponding to each of the PMI port numbers.

Optionally, the terminal may determine the power scaling factor associated with the PMI port based on at least one of the following:
(1) a quantity of PMI ports;
(2) a quantity of reference signal ports associated with one reference signal;
(3) a quantity of reference signal ports associated with a plurality of reference signals;
(4) a quantity of reference signal ports associated with a CDM group associated with one reference signal;
(5) a quantity of reference signal ports associated with CDM groups associated with a plurality of reference signals;
(6) a quantity of available reference signal ports in a quantity of reference signal ports associated with a CDM group associated with one reference signal; and
(7) a quantity of available reference signal ports in a quantity of reference signal ports associated with CDM groups associated with a plurality of reference signals.

In other words, the power scaling factor is related to at least one of the foregoing (1) to (7).

In an optional implementation, the terminal may further obtain a CQI based on the power scaling factor. In other words, before obtaining the CQI based on the precoding matrix, the terminal may take a power scaling factor into account, so that the obtained CQI is more consistent with an actual transmission condition.

In the foregoing optional implementation, the CQI may be calculated based on the following formula: $\left[\begin{matrix}{y}_{i}^{\left(0\right)} \left(i\right) \\ ⋮ \\ {y}_{i}^{\left(P-1\right)} \left(i\right)\end{matrix}\right] = \sqrt{{βP}_{c} {N}_{CDM}} W \left(i\right) \left[\begin{matrix}{x}_{i}^{\left(0\right)} \left(i\right) \\ ⋮ \\ {x}_{i}^{\left(ν-1\right)} \left(i\right)\end{matrix}\right]$ or $\left[\begin{matrix}{y}_{i}^{\left(0\right)} \left(i\right) \\ ⋮ \\ {y}_{i}^{\left(P-1\right)} \left(i\right)\end{matrix}\right] = \sqrt{{βP}_{c} {N}_{p}} W \left(i\right) \left[\begin{matrix}{x}_{i}^{\left(0\right)} \left(i\right) \\ ⋮ \\ {x}_{i}^{\left(ν-1\right)} \left(i\right)\end{matrix}\right]$ i represents an i^{th} calculation, P represents a quantity of PMI ports, *N*_{CDM} represents a quantity of ports in one CDM group, *P_{c}* represents a power offset configured by network signaling, *β* represents the power scaling factor, and ***W***(*i*) represents a precoding matrix for the i^{th} calculation. *Nₚ* represents a quantity of reference signal ports associated with one or more reference signals.

In a possible implementation, the power scaling factor may be a quotient obtained by division of a quantity of available reference signal ports in reference signal ports associated with CDM groups associated with one or more reference signals and a quantity of reference signal ports associated with CDM groups associated with one or more reference signals.

In another possible implementation, the power scaling factor may be a quotient obtained by division of a quantity of the PMI ports and a quantity of reference signal ports associated with one or more reference signals.

Whether the terminal performs power scaling or assumes a power scaling factor when calculating the CQI may be indicated by network signaling. It may be understood as that the network side device may indicate, through signaling, whether the terminal applies the power scaling factor when calculating the CQI.

In an implementation, when determining the target mapping relationship, the terminal may map a plurality of reference signal port numbers to one PMI port number based on the seventh network signaling. The plurality of reference signal port numbers may be a plurality of available reference signal port numbers of the foregoing plurality of reference signals or a plurality of reference signal port numbers of at least some reference signal port numbers of the one reference signal. Through the implementation, when a capability of the terminal of calculating the precoding matrix is limited, or a capability of obtaining the precoding matrix in a specific time period is limited, and a quantity of calculable PMI ports is less than a quantity of available reference signal ports, the network side device may indicate the terminal to map a plurality of reference signal ports to one PMI port. A mapping manner or a mapping vector may be configured by the network side device, or may be agreed on in the protocol. For example, the terminal sums channels of a plurality of reference signal ports to obtain a channel of an equivalent reference signal port, and further associates a PMI port. In this manner, on one hand, CSI report configuration is enabled to satisfy the capability of the terminal more dynamically and flexibly, thereby avoiding a process of reconfiguring the CSI report configuration when the capability is limited. On the other hand, it may be implemented that a plurality of terminals having different capabilities share one multi-port reference signal, thereby reducing overheads of sending the reference signal by the network.

Optionally, that the terminal maps a plurality of reference signal port numbers to one PMI port number based on the seventh network signaling includes at least one of the following:
1) The terminal maps every n consecutive reference signal port numbers to one PMI port number, where n is a quantity of ports indicated by the seventh network signaling; and in the implementation, the seventh network signaling may indicate a quantity n of ports, and the terminal assumes that every n consecutive reference signal port numbers are mapped to one PMI port number;
2) The terminal maps first m reference signal port numbers associated with each CDM group to one PMI port number, where m is a quantity of ports indicated by the seventh network signaling; and in the implementation, the seventh network signaling indicates a quantity m of ports, and the terminal assumes that first m reference signal ports in each CDM group are mapped to one PMI port; and
3) The terminal maps a reference signal port number of each available CDM group to one PMI port number based on an indication of the seventh network signaling; and in the implementation, the seventh network signaling may indicate that the terminal assumes that all reference signal ports of each CDM group of all available CDM groups are mapped to one PMI port.

Optionally, when the channels obtained by the plurality of reference signal port numbers are mapped to one PMI port number, a mapping matrix, a mapping vector, or a mapping method may be agreed on in the protocol, or may be indicated by the network signaling. For example, the mapping method agreed on in the protocol is that the channels obtained by the plurality of reference signal ports are summed and then mapped to one PMI port number, and the precoding matrix is further obtained based on the channels on all PMI port numbers.

Optionally, the network side device may indicate, through signaling, to use at least one of the foregoing 1)-3) to perform mapping.

In an implementation, when determining the target mapping relationship, the terminal determines, according to an indication of the eighth network signaling or a rule agreed on in the protocol, at least one virtual reference signal port associated with at least one target resource element (Resource element, RE), and maps one virtual reference signal port to one PMI port number. The at least one target RE is at least one of a plurality of REs associated with one reference signal port (the reference signal port may be the plurality of available reference signal ports of the foregoing plurality of reference signals, or one of at least some reference signal ports of the one reference signal). In the implementation, the reference signal port number and the PMI port number do not directly correspond to each other. Instead, a virtual reference signal port is constructed through the RE associated with the reference signal port, and the virtual reference signal port corresponds to the PMI port.

Optionally, the terminal may obtain the channel of the PMI port based on the at least one target RE resource.

In the foregoing implementation, when one reference signal port is associated with a plurality of RE resources, or a plurality of reference signal ports are sent on the same time-frequency resource in a CDM manner, the terminal may measure only at least one RE resource according to an indication of the eighth network signaling or a protocol agreement, the measured at least one RE resource forms at least one equivalent or virtual reference signal port, and the one equivalent or virtual reference signal port is mapped to one PMI port. In this manner, on one hand, configuration of the reference signal is enabled to satisfy the capability of the terminal more dynamically and flexibly, thereby avoiding a process of reconfiguring the reference signal when the capability is limited. On the other hand, it may be implemented that a plurality of terminals having different capabilities share one multi-port reference signal, thereby reducing overheads of sending the reference signal by the network. In addition, it may also be understood that the equivalent reference signal port measured by the terminal is obtained after the plurality of reference signal ports configured by the network side device are virtualized.

For example, the network side device configures a reference signal pattern (pattern) to indicate that two adjacent reference signal ports are mapped to two frequency domain REs in a frequency domain CDM manner shown in Table 5. Assuming that a channel of a first reference signal port is h1, and a channel of a second reference signal port is h2, a channel obtained by the terminal on the first RE is h1+h2. A channel obtained by the terminal on the second RE is h1-h2, and the terminal may obtain h1 and h2 through an elimination method by addition and subtraction. When the capability of the terminal is limited or the network side device has a requirement, the network side device may indicate the terminal to measure only a channel on the first RE, that is, a channel obtained by the terminal is h1+h2, associate h1+h2 obtained by the terminal with a virtual reference signal port, further associate all virtual reference signal ports with the PMI port, and further obtain the PMI.

**Table 5.**

| Index | [w_{f}(0) w_{f}(1)] |
|---|---|
| 0 | [+1 +1] |
| 1 | [+1 -1] |

For another example, the network configures a reference signal pattern (pattern) to indicate that four adjacent reference signal ports are mapped to four REs in a time domain and frequency domain CDM manner shown in Table 6. It is assumed that a channel of a first reference signal port is h1, a channel of a second reference signal port is h2, a channel of a third reference signal port is h3, and a channel of a fourth reference signal port is h4. A channel obtained by the terminal on the first RE is h1+h2+h3+h4. A channel obtained by the terminal on the second RE is h1+h2-h3-h4. A channel obtained by the terminal on the third RE is h1-h2+h3-h4. A channel obtained by the terminal on the fourth RE is h1-h2-h3+h4, and the terminal may obtain h1, h2, h3, and h4 through the elimination method by addition and subtraction. When the capability of the terminal is limited or the network has a requirement, the network may indicate the terminal to measure only a channel on the first RE and a channel on the second RE, that is, the channels obtained by the terminal are h1+h2+h3+h4 and h1+h2-h3-h4, respectively associate h1+h2+h3+h4 and h1+h2-h3-h4 obtained by the terminal with two virtual reference signal ports, further associate all virtual reference signal ports with the PMI port, and further obtain the PMI.

**Table 6.**

| **Index** | [***w***_{f}(**0**) ***w***_{f}(**1**)] | [***w***ₜ(**0**) ***w***ₜ(**1**)] |
|---|---|---|
| 0 | [+1 +1] | [+1 +1] |
| 1 | [+1 -1] | [+1 +1] |
| 2 | [+1 +1] | [+1 -1] |
| 3 | [+1 -1] | [+1 -1] |

In an implementation, when the terminal determines the target mapping relationship, the terminal determines the second mapping relationship according to an indication of the ninth network signaling or a rule agreed on in the protocol based on at least one of the following:
(1) some of a plurality of reference signal ports of the one reference signal; and
(2) a plurality of port groups associated with at least some reference signal ports of the one reference signal.

In the related art, all the reference signal port numbers are mapped to the PMI port numbers in a one-to-one manner in ascending order. In the foregoing implementation, some reference signal ports are selected from a plurality of reference signal ports of one reference signal to obtain a mapping relationship between a reference signal port number and a PMI port number, or a plurality of reference signal ports of one reference signal are divided into a plurality of port groups to obtain a reference signal port number and a PMI port number. To be specific, it may not be that the reference signal ports are mapped to the PMI port number in a one-to-one manner in ascending order.

In the implementation, the terminal may determine a mapping relationship between at least some reference signal port numbers of one reference signal and the PMI port number in a mapper manner of one of the following manner 1, manner 2, and manner 3.

Manner 1: The terminal successively maps the available reference signal port numbers (or the at least some reference signal port numbers) of the one reference signal to the PMI port number in a one-to-one manner in ascending order. The available reference signal port numbers of the one reference signal may be some of the plurality of reference signal ports of the one reference signal according to an indication of the ninth network signaling or the protocol agreement above.

Manner 2: The terminal divides the available reference signal port numbers (or the at least some reference signal port numbers) of the one reference signal into a plurality of port groups, and the terminal adjusts order of the plurality of port groups according to a specific rule, and successively maps the plurality of port groups to the PMI port number after the adjustment.

Manner 3: The terminal divides the available reference signal port numbers (or the at least some reference signal port numbers) of the one reference signal into a plurality of port groups, and the terminal adjusts order of all available reference signal port numbers in order of the port groups and the port numbers in the port groups, and successively maps the available reference signal port numbers to the PMI port number after the adjustment. For example, the order is a first port of a first group, a first port of a second group, ..., a second port of the first group, a second port of the second group, ..., and an M^{th} port of an N^{th} group, where N indicates a quantity of groups, and M indicates a quantity of ports in one group. Optionally, before determining the order, the terminal may first adjust the order of the plurality of port groups according to a specific rule.

By using the foregoing implementation, the network side device may indicate, through signaling, the terminal how to correspond a port number of a reference signal resource to a PMI port number or a row number of the precoding matrix.

For example, the network side device indicates, through the higher-layer signaling, the terminal to correspond a port number of a reference signal resource to a PMI port number or a row number of the precoding matrix in the foregoing manner 1. Alternatively, the network side device indicates, through the higher-layer signaling, the terminal to correspond a port number of a reference signal resource to a PMI port number or a row number of the precoding matrix in the foregoing manner 2.

Alternatively, it may also be understood that the protocol agrees that when a first case occurs, the terminal corresponds a port number of a reference signal resource to a PMI port number or a row number of the precoding matrix in the foregoing manner 1, or when a second case occurs, the terminal corresponds a port number of a reference signal resource to a PMI port number or a row number of the precoding matrix in the foregoing manner 2. The first case or the second case may be a first value or a second value of the network signaling.

For example, when the network signaling indicates that a codebook type is a type1 single panel codebook, the terminal determines a correspondence in the foregoing manner 1. When the network signaling indicates that the codebook type is a type1 multiple panels codebook, the terminal determines the correspondence in the foregoing manner 2.

For another example, when a quantity of ports of one reference signal or a quantity of ports of one reference signal set exceeds the first value, the terminal determines the correspondence in the foregoing manner 2. Similarly, when the quantity of ports of one reference signal set or the quantity of ports of one reference signal set is less than or equal to the first value, the terminal determines the correspondence in the foregoing manner 1.

Further, optionally, when the terminal divides the available port numbers (or the at least some reference signal port numbers) into a plurality of port groups, a quantity of the port groups is indicated by the network signaling or obtained through an indication of the network signaling.

For example, if the network side device indicates, through the higher-layer signaling, that a codebook port configuration is ng=2 or a quantity of subarrays is 2 or a quantity of antenna panels is 2, the terminal successively divides all ports {3000, 3001, ..., 3000+P-1} of one reference signal into four groups: {3000, ..., 3000+P1-1}, {3000+P1, ..., 3000+2*P1-1}, {3000+2*P1, ..., 3000+3*P1-1}, and {3000+3*P1, ..., 3000+4*P1-1}, where 4*P1=P, and P indicates a quantity of ports of the reference signal. The port groups {3000, ..., 3000+P1-1} and {3000+2*P1, ..., 3000+3*P1-1} are associated with a first polarization direction of the precoding matrix, and are successively mapped to the PMI port numbers {0, 1, 2, ..., 2*P1-1} in ascending order of the port numbers. The port groups {3000+P1, ..., 3000+2*P1-1} and {3000+3*P1, ..., 3000+4*P1-1} are associated with a second polarization direction of the precoding matrix, and are successively mapped to the PMI port numbers {2*P1, 2*P1+1, ..., 4*P1-1} in ascending order of the port numbers.

For another example, if the network side device indicates, through the higher-layer signaling, that a codebook port configuration is ng=4 or a quantity of subarrays is 4 or a quantity of antenna panels is 4, the terminal successively divides all ports {3000, 3001, ..., 3000+P-1} of one reference signal into eight groups: {3000, ..., 3000+P1-1}, {3000+P1, ..., 3000+2*P1-1}, {3000+2*P1, ..., 3000+3*P1-1}, {3000+3*P1, ..., 3000+4*P1-1}, {3000+4*P1, ..., 3000+5*P1-1}, {3000+5*P1, ..., 3000+6*P1-1}, {3000+6*P1, ..., 3000+7*P1-1}, and {3000+7*P1, ..., 3000+8*P1-1}, where 8*P1=P, and P indicates a quantity of ports of the reference signal. The port groups {3000, ..., 3000+P1-1}, {3000+2*P1, ..., 3000+3*P1-1}, {3000+4*P1, ..., 3000+5*P1-1}, and {3000+6*P1, ..., 3000+7*P1-1} are associated with the first polarization direction of the precoding matrix, and are successively mapped to the PMI port numbers {0, 1, 2, ..., 4*P1-1} in ascending order of the port numbers. The port groups {3000+P1, ..., 3000+2*P1-1}, {3000+3*P1, ..., 3000+4*P1-1}, {3000+5*P1, ..., 3000+6*P1-1}, and {3000+7*P1, ..., 3000+8*P1-1} are associated with the second polarization direction of the precoding matrix, and are successively mapped to the PMI port numbers {4*P1, 2*P1+1, ..., 8*P1-1} in ascending order of the port numbers.

In the foregoing manner, it may be implemented that a plurality of users supporting different codebook types share one reference signal, or a plurality of codebook types share one reference signal, thereby reducing overheads of the network reference signal.

In embodiments of this application, after obtaining the precoding matrix, the terminal may report the obtained precoding matrix to the network side device through the CSI report.

It should be noted that, in embodiments of this application, the first network signaling, the second network signaling, the third network signaling, the fourth network signaling, the fifth network signaling, the sixth network signaling, the seventh network signaling, the eighth network signaling, and the ninth network signaling may be the same network signaling, or may be partially the same network signaling. For example, the second network signaling, the third network signaling, and the fourth network signaling are the same network signaling, and the remaining network signaling is respectively different network signaling, or may be completely different network signaling. For example, any two of the first network signaling, the second network signaling, the third network signaling, the fourth network signaling, the fifth network signaling, the sixth network signaling, the seventh network signaling, the eighth network signaling, and the ninth network signaling is not the same network signaling.

Optionally, the association described in embodiments of this application is not limited to one of the following explanations:
A being associated with B indicates that A is B;
A being associated with B indicates that B can be obtained through A; and
A being associated with B indicates that B can be determined through A.

Based on the same technical concept, this embodiment of this application further provides another method for obtaining a precoding matrix.

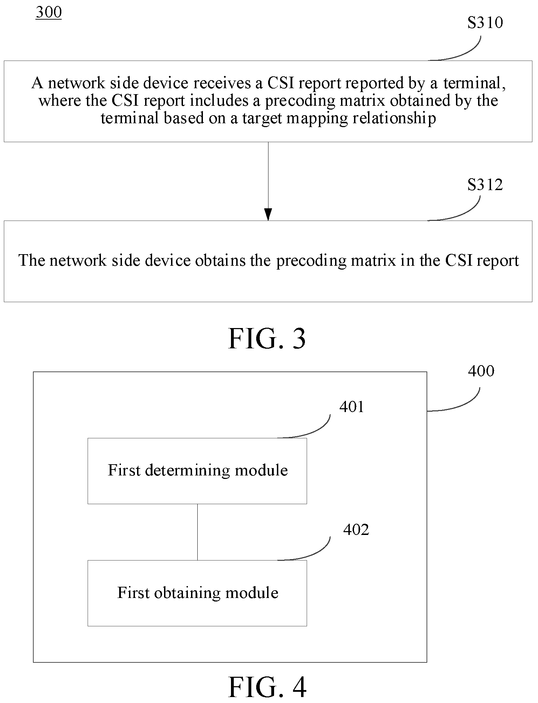

FIG. 3 is another schematic flowchart of a method for obtaining a precoding matrix according to an embodiment of this application. The method 300 may be performed by a network side device. In other words, the method may be performed by software or hardware installed in the network side device. It should be noted that the following embodiments only describe operations of the network side device. For other matters not covered, refer to the foregoing relevant descriptions related to the method 200.

S310: The network side device receives a CSI report reported by a terminal, where the CSI report includes a precoding matrix obtained by the terminal based on a target mapping relationship.

In embodiments of this application, the target mapping relationship includes at least one of the following: a first mapping relationship between a plurality of available reference signal port numbers of a plurality of reference signals and PMI port number, and a second mapping relationship between at least some reference signal port numbers of one reference signal and the PMI port number.

The terminal may obtain the precoding matrix based on the relevant descriptions in the foregoing method 200. For details, refer to the descriptions in the method 200.

S312: The network side device obtains the precoding matrix in the CSI report.

In embodiments of this application, the network side device may obtain the precoding matrix from the CSI report in a manner of obtaining the precoding matrix from the CSI report in the related art. A specific obtaining manner is not limited in embodiments of this application.

In an optional implementation, the method further includes at least one of the following:
1) The network side device sends first network signaling to the terminal, where the first network signaling is used for indicating a mapping manner between a plurality of available reference signal port numbers of the plurality of reference signals and the PMI port number.
2) The network side device sends second network signaling to the terminal, where the second network signaling is used for indicating some of the plurality of reference signals.
3) The network side device sends third network signaling to the terminal, where the third network signaling is used for indicating a reference signal port group selected for each of the plurality of reference signals.
4) The network side device sends fourth network signaling to the terminal, where the fourth network signaling is used for indicating a reference signal port selected for each of the plurality of reference signals.
5) The network side device sends fifth network signaling to the terminal, where the fifth network signaling is used for indicating some available reference signal ports within each CDM group associated with one reference signal.
6) The network side device sends sixth network signaling to the terminal, where the sixth network signaling is used for indicating an available CDM group associated with one reference signal.
7) The network side device sends seventh network signaling to the terminal, where the seventh network signaling is used for indicating that a plurality of reference signal port numbers are mapped to one PMI port number.
8) The network side device sends eighth network signaling to the terminal, where the eighth network signaling is used for indicating at least one virtual reference signal port associated with at least one target resource element RE, and that the virtual reference signal port is mapped to one PMI port number.
9) The network side device sends ninth network signaling to the terminal, where the ninth network signaling is used for indicating that the second mapping association is determined as one of the following based on one of the following:
   some of a plurality of reference signal ports of the one reference signal; and
   a plurality of port groups associated with at least some reference signal ports of the one reference signal.

In an optional implementation, the method may further include: The network side device determines the target mapping relationship. For example, the network side device may determine the target mapping relationship before or after obtaining the precoding matrix in the CSI report, so as to learn the reference signal port number associated with the PMI port number corresponding to the obtained precoding matrix, and then determine channel quality corresponding to the reference signal port number based on the obtained precoding matrix.

In an optional implementation, that the network side device determines the target mapping relationship includes at least one of the following:
(1) The network side device determines the target mapping relationship according to a protocol agreement; and
(2) The network side device determines the target mapping relationship based on an indication of at least one piece of network signaling sent to the terminal.

For example, the network side device may determine the target mapping relationship, and then send relevant information for determining the target mapping relationship to the terminal through at least one of the first network signaling to the ninth network signaling. Alternatively, the network side device may determine the foregoing target mapping relationship according to the protocol agreement. Alternatively, the network side device may determine the target mapping relationship based on the relevant information determined in the protocol agreement, and then send the relevant information determined by the network side device to the terminal through at least one of the first network signaling to the ninth network signaling above. A specific manner in which the network side device determines the target mapping relationship is the same as that of the terminal. Refer to the relevant descriptions in the foregoing method 200.

Through the foregoing technical solutions provided in embodiments of this application, the network side device may be supported in flexibly selecting some reference signals or obtaining a PMI through some reference signal ports; support a mapping method for mapping available ports of a plurality of reference signals to PMI ports; support configuring, to the terminal, a reference signal exceeding a measurement capability of the terminal; support the terminal in mapping a plurality of reference signal ports to one PMI port, to better match a capability of the terminal; and support the terminal in measuring some REs to obtain virtual reference signal ports, to reduce complexity.

The method for obtaining a precoding matrix provided in embodiments of this application may be performed by an apparatus for obtaining a precoding matrix. In embodiments of this application, the apparatus for obtaining a precoding matrix provided in embodiments of this application is described by using an example in which the apparatus for obtaining a precoding matrix performs the method for obtaining a precoding matrix.

FIG. 4 is a schematic structural diagram of an apparatus for obtaining a precoding matrix according to an embodiment of this application. As shown in FIG. 4, the apparatus 400 includes: a first determining module 401 and a first obtaining module 402.

In embodiments of this application, the first determining module 401 is configured to determine a target mapping relationship, where the target mapping relationship includes at least one of the following: a first mapping relationship between a plurality of available reference signal port numbers of a plurality of reference signals and a precoding matrix indicator PMI port number, and a second mapping relationship between at least some reference signal port numbers of one reference signal and the PMI port number; and the first obtaining module is configured to obtain a precoding matrix based on the target mapping relationship.

In an optional implementation, the first determining module 401 determines the first mapping relationship through at least one of the following:
a configuration order of the plurality of reference signals;
identifiers of the plurality of reference signals; and
N port groups associated with an available reference signal port of each of the plurality of reference signals, where N is an integer greater than 1.

In an optional implementation, the first determining module 401 is further configured to determine a mapping manner between the plurality of available reference signal port numbers of the plurality of reference signals and the PMI port number based on first network signaling.

In an optional implementation, the first determining module 401 is further configured to determine the plurality of available reference signal port numbers of the plurality of reference signals or at least one available reference signal port number of each of the plurality of reference signals.

In an optional implementation, that the first determining module 401 determines the plurality of available reference signal port numbers of the plurality of reference signals or at least one available reference signal port number of each of the plurality of reference signals includes at least one of the following:
obtaining some of the plurality of reference signals based on second network signaling, and determining that all reference signal port numbers of some reference signals are the plurality of available reference signal port numbers, or determining that all available reference signal port numbers of some reference signals are the plurality of available reference signal port numbers;
obtaining a reference signal port group of each of the plurality of reference signals based on third network signaling, and determining the plurality of available reference signal port numbers based on the reference signal port group of each of the plurality of reference signals; and
the terminal obtains a reference signal port of each of the plurality of reference signals based on fourth network signaling, and determines the plurality of available reference signal port numbers based on the reference signal port of each of the plurality of reference signals.

In an optional implementation, the first determining module 401 determines the second mapping relationship based on at least one of the following:
obtaining some available reference signal ports within each code division multiplexing CDM group associated with the one reference signal based on fifth network signaling, and determining the second mapping relationship between at least some reference signal port numbers of the one reference signal and the PMI port number based on some available reference signal ports within a plurality of CDM groups associated with the one reference signal; and
obtaining an available CDM group associated with one reference signal based on sixth network signaling, and determining the second mapping relationship between at least some reference signal port numbers of the one reference signal and the PMI port number based on a reference signal port associated with at least one obtained available CDM group.

In an optional implementation, the first determining module 401 is further configured to determine a power scaling factor associated with a PMI port corresponding to the PMI port number.

In an optional implementation, that the first determining module 401 determines a power scaling factor associated with the PMI port includes:
determining the power scaling factor associated with the PMI port based on at least one of the following:
a quantity of PMI ports;
a quantity of reference signal ports associated with one reference signal;
a quantity of reference signal ports associated with a plurality of reference signals;
a quantity of reference signal ports associated with a CDM group associated with one reference signal;
a quantity of reference signal ports associated with CDM groups associated with a plurality of reference signals;
a quantity of available reference signal ports in a quantity of reference signal ports associated with a CDM group associated with one reference signal; and
a quantity of available reference signal ports in a quantity of reference signal ports associated with CDM groups associated with a plurality of reference signals.

In an optional implementation, that the first determining module 401 determines a target mapping relationship includes: mapping a plurality of reference signal port numbers to one PMI port number based on the seventh network signaling.

In an optional implementation, that the first determining module 401 maps a plurality of reference signal port numbers to one PMI port number based on the seventh network signaling includes at least one of the following:
mapping every n consecutive reference signal port numbers to one PMI port number, where n is a quantity of ports indicated by the seventh network signaling;
mapping first m reference signal port numbers associated with each CDM group to one PMI port number, where m is a quantity of ports indicated by the seventh network signaling; and
mapping a reference signal port number of each available CDM group to one PMI port number based on an indication of the seventh network signaling.

In an optional implementation, that the first determining module 401 determines a target mapping relationship includes: determining at least one virtual reference signal port associated with at least one target resource element RE according to an indication of eighth network signaling or a rule agreed on in a protocol, and mapping one virtual reference signal port to one PMI port number, where the at least one target RE is at least one of a plurality of REs associated with one reference signal port.

In an optional implementation, that the first determining module 401 determines a target mapping relationship further includes: determining the second mapping relationship according to an indication of ninth network signaling or a rule agreed on in a protocol based on at least one of the following:
some of a plurality of reference signal ports of the one reference signal; and
a plurality of port groups associated with at least some reference signal ports of the one reference signal.

The apparatus for obtaining a precoding matrix in embodiments of this application may be an electronic device, for example, an electronic device having an operating system, or a component in an electronic device, such as an integrated circuit or a chip. The electronic device may be a terminal, or may be another device other than a terminal. For example, the terminal may include, but is not limited to, the types of the terminal 11 listed above, and the another device may be a server, a network attached storage (Network Attached Storage, NAS), or the like. This is not specifically limited in embodiments of this application.

The apparatus for obtaining a precoding matrix provided in embodiments of this application can implement the processes implemented in the method embodiment of FIG. 2, and achieve a same technical effect. To avoid repetition, details are not described herein again.

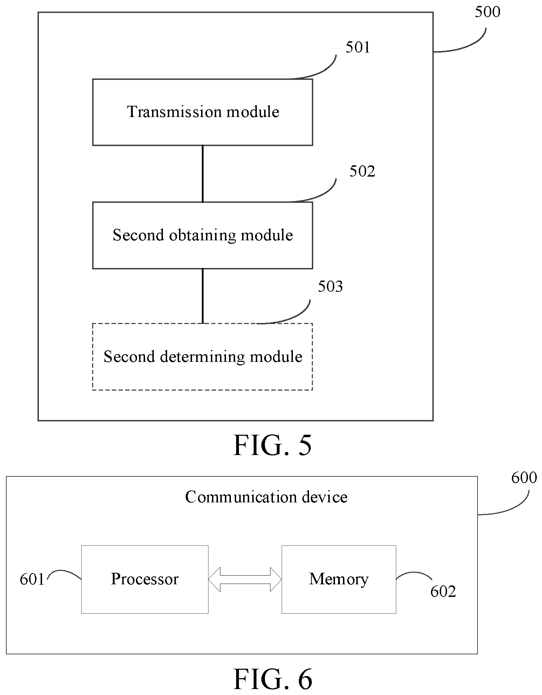

FIG. 5 is another schematic structural diagram of an apparatus for obtaining a precoding matrix according to an embodiment of this application. As shown in FIG. 5, the apparatus 500 includes a transmission module 501 and a second obtaining module 502.

In embodiments of this application, the transmission module 501 is configured to receive a channel state information CSI report reported by a terminal, where the CSI report includes a precoding matrix obtained by the terminal based on a target mapping relationship, and the target mapping relationship includes at least one of the following: a first mapping relationship between a plurality of available reference signal port numbers of a plurality of reference signals and a PMI port number, and a second mapping relationship between at least some reference signal port numbers of one reference signal and the PMI port number. The second obtaining module 502 is configured to obtain the precoding matrix in the CSI report.

In an optional implementation, the transmission module 501 is further configured to at least one of:
send first network signaling to the terminal, where the first network signaling is used for indicating a mapping manner between a plurality of available reference signal port numbers of the plurality of reference signals and the PMI port number;
send second network signaling to the terminal, where the second network signaling is used for indicating some of the plurality of reference signals;
send third network signaling to the terminal, where the third network signaling is used for indicating a reference signal port group selected for each of the plurality of reference signals;
send fourth network signaling to the terminal, where the fourth network signaling is used for indicating a reference signal port selected for each of the plurality of reference signals;
send fifth network signaling to the terminal, where the fifth network signaling is used for indicating some available reference signal ports within each CDM group associated with one reference signal;
send sixth network signaling to the terminal, where the sixth network signaling is used for indicating an available CDM group associated with one reference signal;
send seventh network signaling to the terminal, where the seventh network signaling is used for indicating that a plurality of reference signal port numbers are mapped to one PMI port number;
send eighth network signaling to the terminal, where the eighth network signaling is used for indicating at least one virtual reference signal port associated with at least one target resource element RE, and that the virtual reference signal port is mapped to one PMI port number; and
send ninth network signaling to the terminal, where the ninth network signaling is used for indicating that the second mapping association is determined as one of the following based on one of the following:
   some of a plurality of reference signal ports of the one reference signal; and
   a plurality of port groups associated with at least some reference signal ports of the one reference signal.

In an optional implementation, as shown in FIG. 5, the apparatus may further include a second determining module 503, configured to determine the target mapping relationship.

In an optional implementation, that the second determining module 503 determines the target mapping relationship includes at least one of the following:
determining the target mapping relationship according to a protocol agreement; and
determining the target mapping relationship based on an indication of at least one piece of network signaling sent to the terminal.

The apparatus for obtaining a precoding matrix provided in embodiments of this application can implement the processes implemented in the method embodiment of FIG. 3, and achieve a same technical effect. To avoid repetition, details are not described herein again.

As shown in FIG. 6, an embodiment of this application further provides a communication device 600, including a processor 601 and a memory 602. The memory 602 stores a program or instructions executable in the processor 601. For example, when the communication device 600 is a terminal, the program or the instructions, when executed by the processor 601, implement the steps in the foregoing embodiments of the method 200 for obtaining a precoding matrix, and can achieve the same technical effect. When the communication device 600 is a network side device, the program or the instructions, when executed by the processor 601, implement the steps in the foregoing embodiments of the method 300 for obtaining a precoding matrix, and can achieve the same technical effect. To avoid repetition, details are not described herein again.

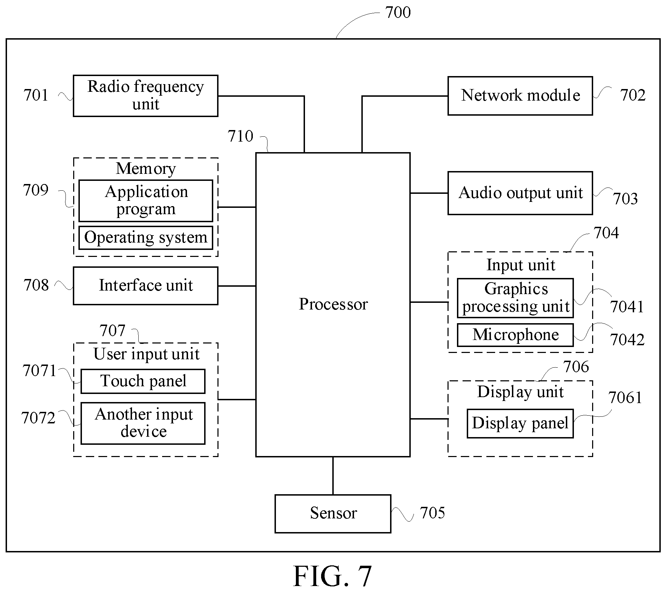

An embodiment of this application further provides a terminal, including a processor and a communication interface. The communication interface is coupled to the processor. The processor is configured to run a program or instructions, to implement the steps in the method embodiment shown in FIG. 2. The terminal embodiment corresponds to the foregoing method embodiment of the terminal side. The implementation processes and implementations of the foregoing method embodiment are all applicable to the terminal embodiment, and can achieve the same technical effect. Specifically, FIG. 7 is a schematic diagram of a hardware structure of a terminal for implementing an embodiment of this application.

The terminal 700 includes but is not limited to at least some of components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (such as a battery) that supplies power to various components. The power supply may be logically connected to the processor 710 through a power management system, thereby implementing functions such as charging, discharging, and power consumption management through the power management system. The terminal structure shown in FIG. 7 constitutes no limitation on the terminal, and the terminal may include more or fewer components than those shown in the figure, or some merged components, or different component arrangements. Details are not described herein again.

It should be noted that in embodiments of this application, the input unit 704 may include a graphics processing unit (Graphics Processing Unit, GPU) 7041 and a microphone 7042. The graphics processing unit 7041 processes image data of a static picture or a video obtained by an image capture apparatus (such as a camera) in a video capture mode or an image capture mode. The display unit 706 may include a display panel 7061. The display panel 7061 may be configured in a form such as a liquid crystal display or an organic light-emitting diode. The user input unit 707 includes at least one of a touch panel 7071 or another input device 7072. The touch panel 7071 is also referred to as a touch screen. The touch panel 7071 may include two parts: a touch detection apparatus and a touch controller. The another input device 7072 may include but is not limited to a physical keyboard, a function button (such as a volume control button or a power button), a trackball, a mouse, and a joystick. Details are not described herein again.

In embodiments of this application, the radio frequency unit 701 receives downlink data from a network side device, and then may transmit the data to the processor 710 for processing. In addition, the radio frequency unit 701 may send uplink data to the network side device. Generally, the radio frequency unit 701 includes but is not limited to an antenna, an amplifier, a transceiver, a coupler, a low noise amplifier, a duplexer, and the like.

The memory 709 may be configured to store a software program or instructions and various data. The memory 709 may mainly include a first storage area for storing a program or instructions and a second storage area for storing data. The first storage area may store an operating system, an application or instructions required for at least one function (such as a sound playback function and an image playback function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 709 in embodiments of this application includes but is not limited to these and any other suitable types of memories.

The processor 710 may include one or more processing units. Optionally, an application processor and a modem processor are integrated into the processor 710. The application processor mainly processes operations related to an operating system, a user interface, an application, and the like. The modem processor mainly processes a wireless communication signal, for example, may be a baseband processor. It may be understood that the foregoing modem processor may alternatively not be integrated into the processor 710.

The processor 710 is configured to:
determine a target mapping relationship, where the target mapping relationship includes at least one of the following: a first mapping relationship between a plurality of available reference signal port numbers of a plurality of reference signals and a precoding matrix indicator PMI port number, and a second mapping relationship between at least some reference signal port numbers of one reference signal and the PMI port number; and
obtain a precoding matrix based on the target mapping relationship.

It may be understood that the implementation process of each implementation mentioned in this embodiment, reference may be made to the relevant description of the method embodiments 200, and the same or corresponding technical effects can be achieved. To avoid repetition, details are not described herein again.

An embodiment of this application further provides a network side device, including a processor and a communication interface. The communication interface is coupled to the processor. The processor is configured to run a program or an instruction, to implement the steps of the method embodiment shown in FIG. 3. The network side device embodiment corresponds to the foregoing method embodiment of the network side device. The implementation processes and implementations of the foregoing method embodiment are all applicable to embodiments of the network side device, and can achieve the same technical effect.

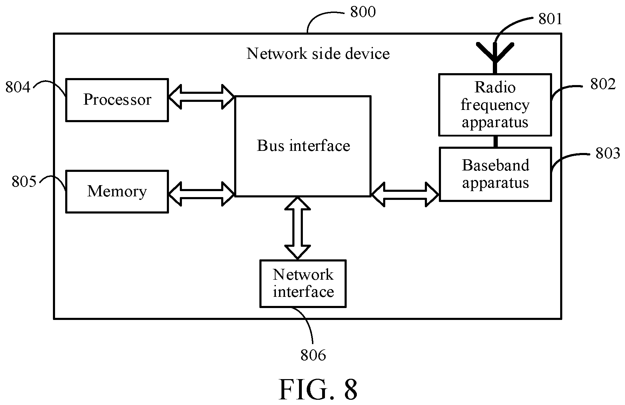

Specifically, an embodiment of this application further provides a network side device. As shown in FIG. 8, the network side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information through the antenna 801, and sends the received information to the baseband apparatus 803 for processing. In a downlink direction, the baseband apparatus 803 processes to-be-sent information and sends the processed to-be-sent information to the radio frequency apparatus 802. The radio frequency apparatus 802 processes the received information and then sends the processed received information through the antenna 801.

The method performed by the network side device in the foregoing embodiment may be implemented in the baseband apparatus 803. The baseband apparatus 803 includes a baseband processor.

The baseband apparatus 803 may include, for example, at least one baseband board. A plurality of chips are arranged on the baseband board, as shown in FIG. 8. One of the chips is for example a baseband processor, and is connected to the memory 805 through a bus interface to invoke a program in the memory 805 and perform the operations of the network device shown in the foregoing method embodiment.

The network side device may further include a network interface 806. The interface is, for example, a common public radio interface (Common Public Radio Interface, CPRI).

Specifically, the network side device 800 in embodiments of this application further includes instructions or a program stored in the memory 805 and executable on the processor 804. The processor 804 calls the instructions or the program in the memory 805 to perform the method performed by each module shown in FIG. 5, and achieves the same technical effect. To avoid repetition, details are not described herein again.

An embodiment of this application further provides a readable storage medium. The readable storage medium stores a program or instructions. The program or the instructions, when executed by a processor, implement each process in the foregoing embodiments of the method 200 for obtaining a precoding matrix, or implement each process in the foregoing embodiments of the method 300 for obtaining a precoding matrix, and can achieve the same technical effect. To avoid repetition, details are not described herein again.

The processor is a processor in the terminal described in the foregoing embodiments. The readable storage medium includes a computer-readable storage medium, such as a computer read-only memory ROM, a random access memory RAM, a magnetic disk, or an optical disk. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement each process in the foregoing embodiments of the method 200 for obtaining a precoding matrix, or to implement each process in the foregoing embodiments of the method 300 for obtaining a precoding matrix, and can achieve the same technical effect. To avoid repetition, details are not described herein again.

It should be understood that the chip mentioned in embodiments of this application may be further referred to as a system level chip, a system chip, a chip system, a system on chip, or the like.

An embodiment of this application further provides a computer program/program product. The computer program/program product is stored in a storage medium. The computer program/program product is executed by at least one processor to implement each process in the foregoing embodiments of the method 200 for obtaining a precoding matrix, or to implement each process in the foregoing embodiments of the method 300 for obtaining a precoding matrix, and can achieve the same technical effect. To avoid repetition, details are not described herein again.

An embodiment of this application further provides a wireless communication system, including a terminal and a network side device. The terminal may be configured to perform the steps of the foregoing method 200 for obtaining a precoding matrix, and the network side device may be configured to perform the steps of the foregoing method 300 for obtaining a precoding matrix.

It should be noted that, a term "comprise", "include" or any other variant herein are intended to encompass non-exclusive inclusion, so that a process, a method, an article, or an apparatus including a series of elements not only includes those elements, but also includes another element not listed explicitly, or includes intrinsic elements for the process, the method, the article, or the apparatus. Without any further limitation, an element defined by the phrase "include one ..." does not exclude existence of an additional same element in the process, the method, the article, or the device that includes the element. In addition, it should be noted that the scope of the method and the apparatus in embodiments of this application is not limited to function execution in the order shown or discussed, and may further include function execution in a substantially simultaneous manner or in the opposite order based on the functions. For example, the described method may be performed in different order from the described order, and various steps may also be added, omitted, or combined. Moreover, features described with reference to some examples may be combined in another example.

Through the descriptions of the foregoing implementations, a person skilled in the art may clearly learn that the method in the foregoing embodiments may be implemented by a computer software product with a necessary universal hardware platform, or may be implemented by hardware. The computer software product is stored in a storage medium (such as a ROM, a RAM, a magnetic disk, or an optical disc) and includes several instructions, to enable the terminal or the network side device to perform the method in embodiments of this application.

Although embodiments of this application are described above with reference to the accompanying drawings, this application is not limited to the foregoing specific implementations. The foregoing specific implementations are illustrative only but not restrictive. With the enlightenment of this application, a person of ordinary skill in the art may make many forms of implementations without departing from the concept of this application and the protection scope of the claims. These implementations fall within the protection scope of this application.

## Claims

1. A method for obtaining a precoding matrix, wherein the method comprises:
determining, by a terminal, a target mapping relationship, wherein the target mapping relationship comprises at least one of the following: a first mapping relationship between a plurality of available reference signal port numbers of a plurality of reference signals and a precoding matrix indicator PMI port number, and a second mapping relationship between at least some reference signal port numbers of one reference signal and the PMI port number; and
obtaining, by the terminal, the precoding matrix based on the target mapping relationship.

2. The method according to claim 1, wherein the terminal determines the first mapping relationship through at least one of the following:
a configuration order of the plurality of reference signals;
identifiers of the plurality of reference signals; and
N port groups associated with an available reference signal port of each of the plurality of reference signals, wherein N is an integer greater than 1.

3. The method according to claim 2, wherein before the terminal determines the first mapping relationship, the method further comprises:
determining, by the terminal, a mapping manner between the plurality of available reference signal port numbers of the plurality of reference signals and the PMI port number based on first network signaling.

4. The method according to claim 2 or 3, wherein before the terminal determines the first mapping relationship, the method further comprises:
determining, by the terminal, the plurality of available reference signal port numbers of the plurality of reference signals, or at least one available reference signal port number of each of the plurality of reference signals.

5. The method according to claim 4, wherein the determining, by the terminal, the plurality of available reference signal port numbers of the plurality of reference signals, or at least one available reference signal port number of each of the plurality of reference signals comprises at least one of the following:
obtaining, by the terminal, some of the plurality of reference signals based on second network signaling, and determining that all reference signal port numbers of some reference signals are the plurality of available reference signal port numbers, or determining that all available reference signal port numbers of some reference signals are the plurality of available reference signal port numbers;
obtaining, by the terminal, a reference signal port group of each of the plurality of reference signals based on third network signaling, and determining the plurality of available reference signal port numbers based on the reference signal port group of each of the plurality of reference signals; and
obtaining, by the terminal, a reference signal port of each of the plurality of reference signals based on fourth network signaling, and determining the plurality of available reference signal port numbers based on the reference signal port of each of the plurality of reference signals.

6. The method according to any one of claims 1 to 5, wherein the terminal determines the second mapping relationship based on at least one of the following:
obtaining, by the terminal based on fifth network signaling, some available reference signal ports within each code division multiplexing CDM group associated with the one reference signal, and determining the second mapping relationship between the at least some reference signal port numbers of the one reference signal and the PMI port number based on some available reference signal ports within a plurality of CDM groups associated with the one reference signal; and
obtaining, by the terminal, an available CDM group associated with one reference signal based on sixth network signaling, and determining the second mapping relationship between the at least some reference signal port numbers of the one reference signal and the PMI port number based on at least one reference signal port associated with the obtained available CDM group.

7. The method according to any one of claims 1 to 6, wherein the determining, by a terminal, a target mapping relationship further comprises:
determining, by the terminal, a power scaling factor associated with a PMI port corresponding to the PMI port number.

8. The method according to claim 7, wherein the determining, by the terminal, a power scaling factor associated with a PMI port comprises:
determining, by the terminal, the power scaling factor associated with the PMI port based on at least one of the following:
a quantity of PMI ports;
a quantity of reference signal ports associated with one reference signal;
a quantity of reference signal ports associated with a plurality of reference signals;
a quantity of reference signal ports associated with a CDM group associated with one reference signal;
a quantity of reference signal ports associated with CDM groups associated with a plurality of reference signals;
a quantity of available reference signal ports in a quantity of reference signal ports associated with a CDM group associated with one reference signal; and
a quantity of available reference signal ports in a quantity of reference signal ports associated with CDM groups associated with a plurality of reference signals.

9. The method according to any one of claims 1 to 8, wherein the determining, by a terminal, a target mapping relationship comprises:
mapping, by the terminal, a plurality of reference signal port numbers to one PMI port number based on seventh network signaling.

10. The method according to claim 9, wherein the mapping, by the terminal, a plurality of reference signal port numbers to one PMI port number based on seventh network signaling comprises at least one of the following:
mapping, by the terminal, every n consecutive reference signal port numbers to one PMI port number, wherein n is a quantity of ports indicated by the seventh network signaling;
mapping, by the terminal, first m reference signal port numbers associated with each CDM group to one PMI port number, wherein m is a quantity of ports indicated by the seventh network signaling; and
mapping, by the terminal, a reference signal port number of each available CDM group to one PMI port number based on an indication of the seventh network signaling.

11. The method according to any one of claims 1 to 10, wherein the determining, by a terminal, a target mapping relationship comprises:
determining, by the terminal, at least one virtual reference signal port associated with at least one target resource element RE according to an indication of eighth network signaling or a rule agreed on in a protocol, and mapping one virtual reference signal port to one PMI port number, wherein the at least one target RE is at least one of a plurality of REs associated with one reference signal port.

12. The method according to any one of claims 1 to 11, wherein the determining, by a terminal, a target mapping relationship further comprises:
determining, by the terminal according to an indication of ninth network signaling or a rule agreed on in a protocol, the second mapping relationship based on at least one of the following:
some of a plurality of reference signal ports of the one reference signal; and
a plurality of port groups associated with at least some reference signal ports of the one reference signal.

13. A method for obtaining a precoding matrix, wherein the method comprises:
receiving, by a network side device, a channel state information CSI report reported by a terminal, wherein the CSI report comprises a precoding matrix obtained by the terminal based on a target mapping relationship, and the target mapping relationship comprises at least one of the following: a first mapping relationship between a plurality of available reference signal port numbers of a plurality of reference signals and a PMI port number, and a second mapping relationship between at least some reference signal port numbers of one reference signal and the PMI port number; and
obtaining, by the network side device, the precoding matrix in the CSI report.

14. The method according to claim 13, further comprising at least one of the following:
sending, by the network side device, first network signaling to the terminal, wherein the first network signaling is used for indicating a mapping manner between a plurality of available reference signal port numbers of the plurality of reference signals and the PMI port number;
sending, by the network side device, second network signaling to the terminal, wherein the second network signaling is used for indicating some of the plurality of reference signals;
sending, by the network side device, third network signaling to the terminal, wherein the third network signaling is used for indicating a reference signal port group selected for each of the plurality of reference signals;
sending, by the network side device, fourth network signaling to the terminal, wherein the fourth network signaling is used for indicating a reference signal port selected for each of the plurality of reference signals;
sending, by the network side device, fifth network signaling to the terminal, wherein the fifth network signaling is used for indicating some available reference signal ports within each CDM group associated with one reference signal;
sending, by the network side device, sixth network signaling to the terminal, wherein the sixth network signaling is used for indicating an available CDM group associated with one reference signal;
sending, by the network side device, seventh network signaling to the terminal, wherein the seventh network signaling is used for indicating that a plurality of reference signal port numbers are mapped to one PMI port number;
sending, by the network side device, eighth network signaling to the terminal, wherein the eighth network signaling is used for indicating at least one virtual reference signal port associated with at least one target resource element RE, and that the virtual reference signal port is mapped to one PMI port number; and
sending, by the network side device, ninth network signaling to the terminal, wherein the ninth network signaling is used for indicating that the second mapping association is determined as one of the following based on one of the following:
some of a plurality of reference signal ports of the one reference signal; and
a plurality of port groups associated with at least some reference signal ports of the one reference signal.

15. The method according to claim 13 or 14, further comprising: determining, by the network side device, the target mapping relationship.

16. The method according to claim 15, wherein the determining, by the network side device, the target mapping relationship comprises at least one of the following:
determining, by the network side device, the target mapping relationship according to a protocol agreement; and
determining, by the network side device, the target mapping relationship based on an indication of at least one piece of network signaling sent to the terminal.

17. An apparatus for obtaining a precoding matrix, wherein the apparatus comprises:
a first determining module, configured to determine a target mapping relationship, wherein the target mapping relationship comprises at least one of the following: a first mapping relationship between a plurality of available reference signal port numbers of a plurality of reference signals and a precoding matrix indicator PMI port number, and a second mapping relationship between at least some reference signal port numbers of one reference signal and the PMI port number; and
a first obtaining module, configured to obtain the precoding matrix based on the target mapping relationship.

18. The apparatus according to claim 17, wherein the first determining module determines the first mapping relationship through at least one of the following:
a configuration order of the plurality of reference signals;
identifiers of the plurality of reference signals; and
N port groups associated with an available reference signal port of each of the plurality of reference signals, wherein N is an integer greater than 1.

19. The apparatus according to claim 18, wherein the first determining module is further configured to determine a mapping manner between the plurality of available reference signal port numbers of the plurality of reference signals and the PMI port number based on first network signaling.

20. The apparatus according to claim 18 or 19, wherein the first determining module is further configured to determine the plurality of available reference signal port numbers of the plurality of reference signals, or at least one available reference signal port number of each of the plurality of reference signals.

21. The apparatus according to claim 20, wherein the determining, by the first determining module, the plurality of available reference signal port numbers of the plurality of reference signals, or at least one available reference signal port number of each of the plurality of reference signals comprises at least one of the following:
obtaining some of the plurality of reference signals based on second network signaling, and determining that all reference signal port numbers of some reference signals are the plurality of available reference signal port numbers, or determining that all available reference signal port numbers of some reference signals are the plurality of available reference signal port numbers;
obtaining a reference signal port group of each of the plurality of reference signals based on third network signaling, and determining the plurality of available reference signal port numbers based on the reference signal port group of each of the plurality of reference signals; and
obtaining a reference signal port of each of the plurality of reference signals based on fourth network signaling, and determining the plurality of available reference signal port numbers based on the reference signal port of each of the plurality of reference signals.

22. The apparatus according to any one of claims 17 to 21, wherein the first determining module determines the second mapping relationship based on at least one of the following:
obtaining, based on fifth network signaling, some available reference signal ports within each code division multiplexing CDM group associated with the one reference signal, and determining the second mapping relationship between the at least some reference signal port numbers of the one reference signal and the PMI port number based on some available reference signal ports within a plurality of CDM groups associated with the one reference signal; and
obtaining an available CDM group associated with one reference signal based on sixth network signaling, and determining the second mapping relationship between at least some reference signal port numbers of the one reference signal and the PMI port number based on at least one reference signal port associated with the obtained available CDM group.

23. The apparatus according to claim 22, wherein the first determining module is further configured to determine a power scaling factor associated with a PMI port corresponding to the PMI port number.

24. The apparatus according to any one of claims 17 to 23, wherein the determining, by the first determining module, a target mapping relationship comprises: mapping a plurality of reference signal port numbers to one PMI port number based on seventh network signaling.

25. The apparatus according to any one of claims 17 to 24, wherein the determining, by the first determining module, a target mapping relationship further comprises: determining, according to an indication of ninth network signaling or a rule agreed on in a protocol, the second mapping based on one of the following:
some of a plurality of reference signal ports of the one reference signal; and
a plurality of port groups associated with at least some reference signal ports of the one reference signal.

26. An apparatus for obtaining a precoding matrix, wherein the apparatus comprises:
a transmission module, configured to receive a channel state information CSI report reported by a terminal, wherein the CSI report comprises a precoding matrix obtained by the terminal based on a target mapping relationship, and the target mapping relationship comprises at least one of the following: a first mapping relationship between a plurality of available reference signal port numbers of a plurality of reference signals and a PMI port number, and a second mapping relationship between at least some reference signal port numbers of one reference signal and the PMI port number; and
a second obtaining module, configured to obtain the precoding matrix in the CSI report.

27. The apparatus according to claim 26, wherein the transmission module is further configured to at least one of:
send first network signaling to the terminal, wherein the first network signaling is used for indicating a mapping manner between a plurality of available reference signal port numbers of the plurality of reference signals and the PMI port number;
send second network signaling to the terminal, wherein the second network signaling is used for indicating some of the plurality of reference signals;
send third network signaling to the terminal, wherein the third network signaling is used for indicating a reference signal port group selected for each of the plurality of reference signals;
send fourth network signaling to the terminal, wherein the fourth network signaling is used for indicating a reference signal port selected for each of the plurality of reference signals;
send fifth network signaling to the terminal, wherein the fifth network signaling is used for indicating some available reference signal ports within each CDM group associated with one reference signal;
send sixth network signaling to the terminal, wherein the sixth network signaling is used for indicating an available CDM group associated with one reference signal;
send seventh network signaling to the terminal, wherein the seventh network signaling is used for indicating that a plurality of reference signal port numbers are mapped to one PMI port number;
send eighth network signaling to the terminal, wherein the eighth network signaling is used for indicating at least one virtual reference signal port associated with at least one target resource element RE, and that the virtual reference signal port is mapped to one PMI port number; and
send ninth network signaling to the terminal, wherein the ninth network signaling is used for indicating that the second mapping association is determined as one of the following based on one of the following:
some of a plurality of reference signal ports of the one reference signal; and
a plurality of port groups associated with at least some reference signal ports of the one reference signal.

28. The apparatus according to claim 26 or 27, further comprising: a second determining module, configured to determine the target mapping relationship.

29. The apparatus according to claim 28, wherein the determining, by the second determining module, the target mapping relationship comprises at least one of the following:
determining the target mapping relationship according to a protocol agreement; and
determining the target mapping relationship based on an indication of at least one piece of network signaling sent to the terminal.

30. A terminal, comprising a processor and a memory, wherein the memory stores a program or instructions executable in the processor, and the program or the instructions, when executed by the processor, implement the steps of the method for obtaining a precoding matrix according to any one of claims 1 to 12.

31. A network side device, comprising a processor and a memory, wherein the memory stores a program or instructions executable in the processor, and the program or the instructions, when executed by the processor, implement the steps of the method for obtaining a precoding matrix according to any one of claims 13 to 17.

32. A readable storage medium, wherein the readable storage medium stores a program or instructions, and the program or the instructions, when executed by a processor, implement the steps of the method for obtaining a precoding matrix according to any one of claims 1 to 12, or implement the steps of the method for obtaining a precoding matrix according to any one of claims 13 to 17.
